# EUROPÄISCHE PATENTSCHRIFT

(11) **EP 0 662 034 B1**
(45) Veröffentlichungstag und Bekanntmachung des Hinweises auf die Patenterteilung: **21.01.1998**
(21) Anmeldenummer: 93921852.5
(22) Anmeldetag: 25.09.1993
(51) Int. Cl.: B29C 45/17

(54) **VORRICHTUNG ZUM SPRITZGIESSEN VON HOHLRÄUME ENTHALTENDEN GEGENSTÄNDEN AUS KUNSTSTOFF SOWIE VERFAHREN ZUM BETRIEB DERSELBEN**
DEVICE FOR THE INJECTION MOULDING OF PLASTIC OBJECTS ENCLOSING HOLLOW SPACES AND PROCESS FOR OPERATING IT
DISPOSITIF POUR LE MOULAGE PAR INJECTION D'ARTICLES EN MATIERE PLASTIQUE PRESENTANT DES CAVITES, ET SON PROCEDE D'UTILISATION

(30) Priorität: 28.09.1992 DE 4229168; 21.10.1992 DE 4235526
(43) Veröffentlichungstag der Anmeldung: 12.07.1995
(73) Patentinhaber: Battenfeld GmbH, D-58540 Meinerzhagen (DE)
(72) Erfinder: ECKARDT, Helmut, D-58540 Meinerzhagen (DE); EHRITT, Jürgen, D-57271 Hilchenbach (DE); SCHRÖDER, Klaus, D-51709 Marienheide (DE); HÜBEL, Uwe, D-58511 Lüdenscheid (DE)
(74) Vertreter: Müller, Gerd, Dipl.-Ing.
(86) Internationale Anmeldenummer: EP9302608
(87) Internationale Veröffentlichungsnummer: WO9407675

(56) Entgegenhaltungen:
- EP-A- 0 390 068
- EP-A- 0 435 025
- WO-A-93/10955
- DE-A- 3 936 289
- US-A- 5 054 689

## Beschreibung

Die Erfindung betrifft eine Vorrichtung zua Spritzgießen von Hohlräume enthaltenden Gegenständen aus Kunststoff in einem Formwerkzeug, dessen Formhohlraum bzw. Kavität einerseits die Kunststoffschmelze durch eine Düse zuzuführen ist und der bzw. die andererseits an einer von der Düse verschiedenen Stelle durch eine Hohlnadel mit einem weiteren unter Druck stehenden Medium, wie z.B. Luft, Gas oder auch Flüssigkeit, beaufschlagbar ist, wobei in der Hohlnadel ein begrenzt axial verschiebbarer Nadelkern angeordnet und über diesen Nadelkern die Mündungsöffnung der Hohlnadel zum Formhohlraum bzw. zur Kavität hin in ihrem Durchlaßquerschnitt variierbar bzw. öffen- und schließbar ist.

Eine Vorrichtung mit dieser Merkmalsausstattung gehört durch die DE-OS 39 36 289 bereits zum Stand der Technik. Gegenüber anderen bekannten Vorrichtungen ähnlicher Bauart, z.B. gemäß DE-OS 21 06 546 zeichnet sie sich dadurch aus, daß auch dann einem Verstopfen der Mündungsöffnung an der Hohlnadel sicher entgegengewirkt wird, wenn diese Mündungsöffnung am Ende des Spritzvorgangs und während der darauf folgenden Nachdruckzeit nur in einen Teil der Wanddicke des Gegenstandes eindringt, also von noch flüssiger Kunststoffschmelze umgeben ist. Nach DE-OS 39 36 289 kann nämlich die Mündungsöffnung der Hohlnadel so klein eingestellt werden, daß sie zwar den Austritt des unter Druck stehenden Mediums in den Formhohlraum bzw. die Kavität ermöglicht, das Eindringen der flüssigen Kunststoffschmelze in die Mündungsöffnung jedoch zumindest dann nicht zuläßt, wenn es sich hierbei um thermoplastisches Kunststoffmaterial handelt.

Für den praktischen Einsatz haben sich besonders diejenigen Spritzgießvorrichtungen nach DE-OS 39 36 289 hervorragend bewährt, bei denen der Nadelkern einen vor dem Mündungsende der Hohlnadel liegenden, verdickten Kopf oder Teller trägt, dessen Außendurchmesser wenigstens annähernd dem Außendurchmesser der Hohlnadel entspricht und bei denen der Nadelkern relativ zur Hohlnadel durch Federmittel axial abgestützt ist, damit der Kopf oder Teller des Nadelkerns mit dem Mündungsende der Hohlnadel ein radial gerichtetes Spaltventil bildet, dessen maximaler Mündungsspalt, bspw. < 0,2 mm, durch die Federmittel-Abstützung bestimmt wird. Gegen die Federmittel-Abstützung kann sich jedoch nach DE-OS 39 36 289 der Mündungsspalt des Spaltventils verkleinern, bspw. wenn sich der Druck des Mediums innerhalb der vom Formhohlraum bzw. der Kavität des Formwerkzeuges aufgenommenen Kunststoffschmelze auf einen Wert erhöht, der die Stellkraft der Federmittel überwinden kann.

Beim Spritzgießen von Gegenständen aus Kunststoff, die relativ große Abmessungen haben und deshalb bei vorgegebenen Wandstärken auch große Hohlräume einschließen, ist es nicht möglich, mit nur einer Hohlnadel in der Zeiteinheit genügend große Mengen des unter Druck stehenden Mediums in den Formhohlraum bzw. die Kavität des Formwerkzeugs einzuführen, weil hierzu der maximal verfügbare Durchlaßquerschnitt des Spaltventils dieser Hohlnadel nicht ausreicht. Es besteht daher die Notwendigkeit, Formwerkzeuge für die Herstellung voluminöser Kunststoff-Gegenstände mit einer entsprechend großen Anzahl in den Formhohlraum bzw. die Kavität einmündender Hohlnadeln auszustatten. Hierdurch wird natürlich der Aufwand für die bereitzustellenden Formwerkzeuge entsprechend hoch, weil jeder Hohlnadel auch noch eine besondere Medienzuführung zugeordnet werden muß.

Eine andere Unzulänglichkeit der durch die DE-OS 39 36 289 bekanntgewordenen Vorrichtung zum Spritzgießen von Hohlräume enthaltenden Gegenständen aus Kunststoff erwächst daraus, daß bei gelegentlich vorkommendem Verschmutzen des Spaltventils der Hohlnadel das zu Reinigungszwecken notwendige Freilegen derselben vom hinteren Ende her vorgenommen werden muß, weil dort der Nadelkern in einer gegen die Hohlnadel abgestützten Fassung festgelegt ist, die aus nur unmittelbar dort handhabbaren Verschraubungselementen, nämlich einem Gewindeabschnitt, einer Stellmutter und einer Kontermutter besteht.

Die minimale Spaltweite - < 0,2 mm - des Spaltventils an dem in dem Formhohlraum bzw. die Kavität des Formwerkzeuges hineinragenden Ende der Hohlnadel läßt aber eine ordnungsgemäße Reinigung ohne Entfernung des Nadelkerns aus der Hohlnadel praktisch nicht zu.

Der Erfindung ist das Ziel gesetzt, die bei gattungsgemäßen Vorrichtungen zum Spritzgießen von Hohlräume enthaltenden Gegenständen aus Kunststoff noch bestehenden Unzulänglichkeiten zu beseitigen sowie darüber hinaus auch die Einsatzmöglichkeiten für derartige Vorrichtungen noch zu verbessern und/oder zu erweitern. Deshalb ist der Erfindung die Aufgabe gestellt, Ausbildungsmöglichkeiten für eine Vorrichtung zum Spritzgießen von Hohlräume enthaltenden Gegenständen aus Kunststoff anzugeben, die nicht nur dem optimalen Öffnen und Schließen des Durchlaßquerschnitts für das Spaltventil der Hohlnadel gewährleisten, sondern darüber hinaus bei Bedarf auch die Freigabe großer Mündungsspalte zulassen. Darüber hinaus sollen aber auch notwendig werdende Reinigungsarbeiten im Bereich des Spaltventils der Hohlnadel erleichtert werden. Schließlich wird aber auch noch angestrebt, die Vorrichtung zum Spritzgießen von Hohlräume enthaltenden Gegenständen aus Kunststoff so auszulegen, daß sie sich auch dann problemlos einsetzen läßt, wenn in den Formhohlraum bzw. die Kavität eines Formwerkzeuges als Material ein Duroplast- bzw. Elastomer-Kunststoff eingebracht werden muß.

Eine gattungsgemäße Vorrichtung zum Spritzgießen von Hohlräume enthaltenden Gegenständen aus Kunststoff, mit der sich die oben aufgezeigte komplexe Aufgabe lösen läßt, zeichnet sich erfindungsgemäß grundsätzlich dadurch aus, daß die Federmittel ständig im Schließsinne der Mündungsöffnung am Nadelkern angreifen und daß der Nadelkern im Öffnungssinne gegen die Federmittel verschiebbar ist.

Die Betätigung des Nadelkerns entgegen der Federmittel im Öffnungssinne kann durch einen fremdgesteuerten Kraftantrieb bewirkt werden. Es besteht jedoch auch die Möglichkeit, den Nadelkern entgegen der Kraft der Federmittel durch das unter Druck stehende Medium selbst zu öffnen. In diesem Falle ist dann aber eine gezielte Druckentlastung vor Öffnen des Spritzgießwerkzeuges nicht möglich. Die Druckentlastung erfolgt in diesem Falle dadurch, daR beim Öffnen des Formwerkzeuges der Druck aus dem Formhohlraum bzw. der Kavität entweicht. Findet eine gattungsgemäße Vorrichtung Anwendung, die mit einer axial verschiebbar zum Formhohlraum bzw. zur Kavität des Formwerkzeuges angeordneten Hohlnadel arbeitet, dann kann die Druckentlastung beim Zurückfahren der Hohlnadel durch die plötzliche Freigabe der Eingasungsöffnung erfolgen.

Obwohl die Betätigung des Nadelkerns im Öffnungssinne durch einen fremdgesteuerten Kraftantrieb bevorzugt wird, ist es also ohne weiteres möglich, das unter Druck stehende Medium selbst, also die Luft, das Gas oder auch Flüssigkeit zu nutzen, um den Nadelkern gegen die Wirkung der Federmittel im Öffnungssinne zu verschieben. In einem solchen Falle empfiehlt es sich, den in die Schmelze hineinragenden vorderen Bereich der Nadelhülse mit einer konisch ausgebildeten Erweiterung zu versehen, weil hierdurch erreicht werden kann, daß der Druckabbau beim Öffnen des Formwerkzeuges nicht schlagartig erfolgt, sondern nur allmählich durch den größer werdenden Spalt.

Während die kleinstmögliche Mündungsöffnung des Spaltventils, welche bspw. zwischen 0 und 0,2 mm betragen kann, immer durch die im Schließsinne wirkenden Federmittel bestimmt wird, lassen sich alle größeren Öffnungsweiten für die Mündungsöffnung bzw. das Spaltventil problemlos und sicher über den fremdgesteuerten Kraftantrieb hervorbringen.

Nach der Erfindung ist es dabei möglich, als fremdgesteuerten Kraftantrieb für den Nadelkern einen Elektromagneten mit einem gegen das hintere Ende des Nadelkerns gerichteten Stößel vorzusehen, und zwar bspw. so, daß dieser in axialer Verlängerung hinter der Hohlnadel bzw. dem Nadelkern an der die Vorrichtung enthaltenden Formhälfte des Formwerkzeugs sitzt.

Als fremdgesteuerter Kraftantrieb für den Nadelkern läßt sich aber auch eine mit Druckmittel beaufschlagbare Kolben-Zylinder-Einheit in Benutzung nehmen, die am hinteren Ende des Nadelkerns angreift. Hierbei ist es von Vorteil, wenn der Nadelkern mit seinem hinteren Ende in einen Kolben eingesetzt ist, der begrenzt axial verschieblich in einer Zylinderbohrung aufgenommen ist, wenn die Federmittel zwischen der Rückseite des Kolbens und einem Endflansch der Hohlnadel eingespannt sind sowie den Nadelkern konzentrisch umgeben, und wenn die Einspeisungsstelle für das unter Druck stehende Medium dem Einbaubereich der Federmittel zugeordnet ist. Im letztgenannten Falle kann die gesamte Vorrichtung problemlos und vollständig innerhalb einer Formhälfte des Formwerkzeuges untergebracht werden.

Hat die Vorrichtung zum Spritzgießen von Hohlräume enthaltenden Gegenständen aus Kunststoff einen Aufbau, bei dem ein Kopf oder Teller des Nadelkerns mit dem Mündungsende der Hohlnadel Spaltventil bildet, dann ist es für die Verarbeitung von thermoplastischem Kunststoffmaterial erfindungsgemäß von Vorteil, daß das Spaltventil auch in der durch die Federmittel gehaltenen Grundstellung des Nadelkerns einen Mündungsspalt vorgebbarer Größe, z.B. < 0,2 mm, offenläßt. Soll jedoch die Vorrichtung zum Spritzgießen von Hohlräume enthaltenden Gegenständen aus Duroplast- oder Elastomer-Kunststoffen eingesetzt werden und dabei ein Kopf oder Teller des Nadelkerns mit dem Mündungsende der Hohlnadel ein Spaltventil bilden, dann ist es von wesentlicher Bedeutung, daß nach der Erfindung am Spaltventil in der durch die Federmittel gehaltenen bzw. vorgespannten Grundstellung des Nadelkerns ein Mündungsspalt mit Größe 0 vorgegeben bzw. eingestellt wird. Es kommt hier darauf an, daß dem Eindringen von Duroplast- bzw. Elastomer-Kunststoffmaterial in den Mündungsspalt des Spaltventils immer dann vorgebeugt wird, wenn hierdurch kein weiteres unter Druck stehendes Medium in den Formhohlraum bzw. die Kavität des Formwerkzeuges bzw. in die darin befindliche Kunststoffschmelze eingeleitet wird.

Mit den bisher bekannten Spritzgieß-Vorrichtungen für Hohlräume enthaltende Gegenstände aus Kunststoff war das Verarbeiten von Duroplasten und Elastomeren nicht beherrschbar, weil dort nach dem Prinzip heißes Formwerkzeug/kalte Schmelze gearbeitet wird und die sich daraus ergebende Viskositätsänderung der Duroplast- bzw. Elastomer-Schmelze ein unerüünschtes Eindringen in die Mündungsöffnung des Spaltventils zur Folge hat, sofern und solange an dieser kein entgegenwirkender Mediendruck ansteht.

Erfindungsgemäß kann jedoch diesem Nachteil vorgebeugt werden, weil der Mündungsspalt des Spaltventils durch die Federmittel selbsttätig auf Größe O gebracht wird, wenn und solange der fremdgesteuerte Kraftantrieb nicht betätigt ist.

Die Freimachung des Mündungsspaltes am Spaltventil der Hohlnadel von Verunreinigungen wird erfindungsgemäß schon allein dadurch erleichtert, daß der fremdgesteuerte Kraftantrieb die Öffnung des Mündungsspaltes um ein relativ großes Maß ermöglicht, welches das Einbringen geeigneter Reinigungsmittel erleichtert.

Wie bereits weiter vorne erwähnt wurde, kann anstelle eines fremdgesteuerten Kraftantriebs auch das unter Druck stehende Medium selbst, also Luft, Gas oder auch Flüssigkeit, zur Bewegung des Nadelkerns der Hohlnadel entgegen der Federmittel herangezogen werden. Das ist auch dann der Fall, wenn es darum geht, den Mündungsspalt am Spaltventil der Hohlnadel von Verunreinigungen freizumachen.

Wenn jedoch bei einer Vorrichtung der eingangs spezifizierten Gattung der Nadelkern mit seinem hinteren Ende in einer gegen das hintere Ende der Hohlnadel abgestützten Fassung festgelegt ist, dann besteht ein besonders vorteilhaftes Weiterbildungsmerkmal der Erfindung darin, daß der Nadelkern vom Mündungsende der Hohlnadel aus und durch diese hindurch lösbar mit der Fassung gekuppelt ist. Dabei hat es sich als besonders vorteilhaft erwiesen, wenn die Kupplung von einem Außengewinde-Abschnitt am hinteren Ende des Nadelkerns und einem Innengewinde-Abschnitt in der Fassung gebildet wird und diese Kupplung bei einem Werkzeugeingriff, bspw. einen Diametralschlitz oder einen Innensechskant betätigbar ist, der sich stirnseitig im Kopf oder Teller des Nadelkerns befindet.

Als Kupplungsmittel zwischen dem hinteren Ende des Nadelkerns und der Fassung kann aber auch eine Renkverbindung bzw. ein Bajonettverschluß vorgesehen werden. Schließlich wäre es aber auch noch denkbar, als Kupplungsmittel zwischen dem hinteren Ende des Nadelkerns und der Fassung Klemmkörper mit zueinander komplementären Klemmflächen vorzusehen.

Da es oft erwünscht oder gar erforderlich ist, mit Hilfe des weiteren Arbeitsmediums innerhalb des Formhohlraumes bzw. der Kavität einen sog. Nachdruck auf die Kunststoffschmelze auszuüben, um eine einwandfreie Ausformung der betreffenden Formteile zu gewährleisten, besteht auch die Notwendigkeit, nach genügender Verfestigung des Kunststoffmaterials eine Druckentlastung des Hohlraums im Formteil unter weitgehender Rückgewinnung des Arbeitsmediums zu ermöglichen. Deshalb sieht eine weitere Bauform für eine erfindungsgemäße Vorrichtung zum Spritzgießen von einen Hohlraum enthaltenen Gegenständen aus Kunststoff vor,
daß auch der Nadelkern durchgehend hohl bzw. rohrförmig ausgebildet ist,
daß der Nadelkern an seinem über das Spaltventil hinausreichenden Ende mit einem weiteren Ventil ausgestattet ist, daß mit dem weiteren Ventil das Ende des Durchgangs im Nadelkern durch das darin unter Druck anstehende Medium bei geöffnetem Spaltventil zum Formhohlraum bzw. zur Kavität hin abgesperrt ist,
und daß am weiteren Ventil ein Kraftspeicher angreift, welcher es - zusätzlich zu dem im Nadelkern unter Druck anstehenden Medium - im Schließsinne unter einer Vorspannung hält,
der aber nach Druckentlastung des im Nadelkern anstehenden Mediums durch das in der Kavität unter Druck enthaltene Medium im Öffnungssinne des weiteren Ventils und des Durchgangs im Nadelkern vom Formhohlraum bzw. der Kavität weg überwindbar ist.

Auch bei dieser Bauform einer Spritzgießvorrichtung für Hohlräume enthaltende Gegenstände aus Kunststoff sind die ständig im Schließsinne der Mündungsöffnung bzw. des Spaltventils am Nadelkern angreifenden Federmittel so vorgesehen, daß der Nadelkern durch das auf ihn einwirkende unter Druck stehende Medium gegen diese Federmittel im Öffnungssinne begrenzt verschiebbar ist, um dann dieses Medium in den Formhohlraum bzw. die Kavität und/oder in die zuvor dort eingebrachte Kunststoffschmelze einzuspritzen.

Es stellt sich hier der Vorteil ein, daß das Spaltventil zwischen der Hohlnadel und dem Nadelkern sowie das weitere Ventil im Durchgang des Nadelkerns jeweils wechselseitig geöffnet und geschlossen werden, so daß für den Druckaufbau in der Kavität und die Druckentlastung aus der Kavität unterschiedliche Strömungswege in engster Nachbarschaft verfügbar sind, die eine optimale Fertigung der Formteile in den Formwerkzeugen begünstigen.

Besonders bewährt hat sich dabei eine Ausgestaltung der Vorrichtung, die dadurch gekennzeichnet ist, daß das weitere Ventil als am freien Ende des Nadelkerns liegendes Kugelventil ausgebildet ist,
daß der Kraftspeicher aus einer hinten am Nadelkern vorgesehenen Feder, insbesondere einer Zugfeder, besteht,
und daß ein mit Radialspiel im Durchgang des Nadelkerns aufgenommener Stift die Stellverbindung des Kraftspeichers mit dem Kugelventil bildet.

Die Kugel des Kugelventils ist im wesentlichen lose in den Durchgang des Nadelkerns eingebracht und wird darin in ihrer Beweglichkeit zu dem über das Spaltventil hinausreichenden Ende des Nadelkerns hin durch den mit ihr in Wirkverbindung tretenden - verengten - Ventilsitz begrenzt. Nach hinten bzw. in Richtung vom weiteren Ventil weg ergibt sich die Bewegungsbegrenzung der Kugel durch den ständig unter der Einwirkung des Kraftspeichers stehenden Stift. Allein durch die Einwirkung des unter Druck stehenden Mediums wird die Kugel des Kugelventils in Richtung vom Durchgang des Nadelkerns aus in die Absperrstellung und in Richtung vom Formhohlraum bzw. von der Kavität aus in Öffnungsstellung beaufschlagt. Der vom Kraftspeicher beeinflußte Stift übt lediglich Stützfunktion für die Kugel des Kugelventils aus, damit diese nicht schon bei Druckentlastung des im Durchgang des Nadelkerns anstehenden Mediums - in unerwünschter Weise - in Öffnungsstellung gelangt.

Gegenstand der Erfindung ist auch noch ein Verfahren zum Betrieb einer Vorrichtung für das Spritzgießen von Hohlräume enthaltenden Gegenständen aus Kunststoff, bei dem in den Formhohlraum bzw. die Kavität eines Formwerkzeuges einerseits die Kunststoffschmelze durch eine Düse zugeführt wird, während dieser bzw. diese an einer von der Düse verschiedenen Stelle durch eine Hohlnadel mit einem weiteren unter Druck stehenden Medium, wie z.B. Luft, Gas oder auch Flüssigkeit, beaufschlagt wird. Dabei ist dieses Verfahren dadurch gekennzeichnet, daß das weitere Medium zunächst unter Druck lediglich gegen das unter Vorspannung in seiner Schließstellung gehaltene Spaltventil gerichtet wird, das während und/oder nach dem Einspritzen von Duroplast- oder Elastomer-Kunststoff in den Formhohlraum bzw. die Kavität das Spaltventil durch Fremdsteuerung gegen die Vorspannung in den Formhohlraum bzw. die Kavität geöffnet wird, um das unter Druck stehende Medium in den Duroplast- bzw. Elastomer-Kunststoff einzuführen, und daß dann - nach einer vorgebbaren Einwirkzeit - das weitere Medium druckentlastet sowie dabei über das ausschließlich durch Fremdsteuerung - wiederum - geöffnete Spaltventil aus dem Formteil abgeführt wird.

Mit diesem Betriebsverfahren einer erfindungsgemäßen Spritzgießvorrichtung lassen sich Gegenstände aus Duroplast- bzw. Elastomer-Kunststoff mit eingeschlossenen Hohlräumen herstellen, ohne daß eine Funktionsbeeinträchtigung der Hohlnadelsysteme eintritt, welche das Einspeisen und das Abziehen der erst die Hohlraumbildung ermöglichenden Medien bewirken.

An in der Zeichnung dargestellten Ausführungsbeispielen wird der Gegenstand der Erfindung nachfolgend ausführlich erläutert. Dabei zeigen:
- Figur 1: im Längsschnitt einen Teilbereich einer Vorrichtung zum Spritzgießen von Hohlräume enthaltenden Gegenständen aus Kunststoff mit einer ein Spaltventil aufweisenden Hohlnadel zur Zuführung eines zusätzlichen Druckmediums in den Formhohlraum bzw. in die Kavität des Formwerkzeuges mit einem fremdgesteuerten Kraftantrieb für die Betätigung des Nadelkerns,
- Figur 2: eine der Fig. 1 ähnliche Schnittdarstellung durch einen Teilbereich einer Vorrichtung zum Spritzgießen von Hohlräume enthaltenden Gegenständen aus Kunststoff, bei welcher der fremdgesteuerte Kraftantrieb für die Betätigung des Nadelkerns der Hohlnadel eine andere Ausbildung hat,
- Figur 3: in vergrößertem Maßstab jeweils den in den Fig. 1 und 2 mit III gekennzeichneten Teilbereich von Hohlnadel und Nadelkern in einer anderen Funktionsstellung, während die
- Fig. 4 bis 7: in größerem Maßstab verschiedene Schnitte jeweils entlang der Linie IV-IV in den Fig. 1 und 2 durch den Kanal der Hohlnadel und den in diesem aufgenommenen Nadelkern wiedergeben;
- Figur 8: zeigt im Schnitt eine Vorrichtung zum Spritzgießen von Hohlräume enthaltenden Gegenständen aus Kunststoff, die mit einer axial verschiebbar zum Formhohlraum bzw. zur Kavität des Formwerkzeuges angeordneten Hohlnadel arbeitet.
- Figur 9: stellt in Seitenansicht eine weitere Bauform für eine Vorrichtung zum Spritzgießen von Hohlraum enthaltenen Gegenständen aus Kunststoff dar, während die
- Figur 10: die entsprechende Vorrichtung im Längsschnitt wiedergibt, und den
- Fig. 10a bis 10c: verschiedene Ausbildungsmöglichkeiten der Vorrichtung nach Fig. 10 in größerem Maßstab zu entnehmen sind.

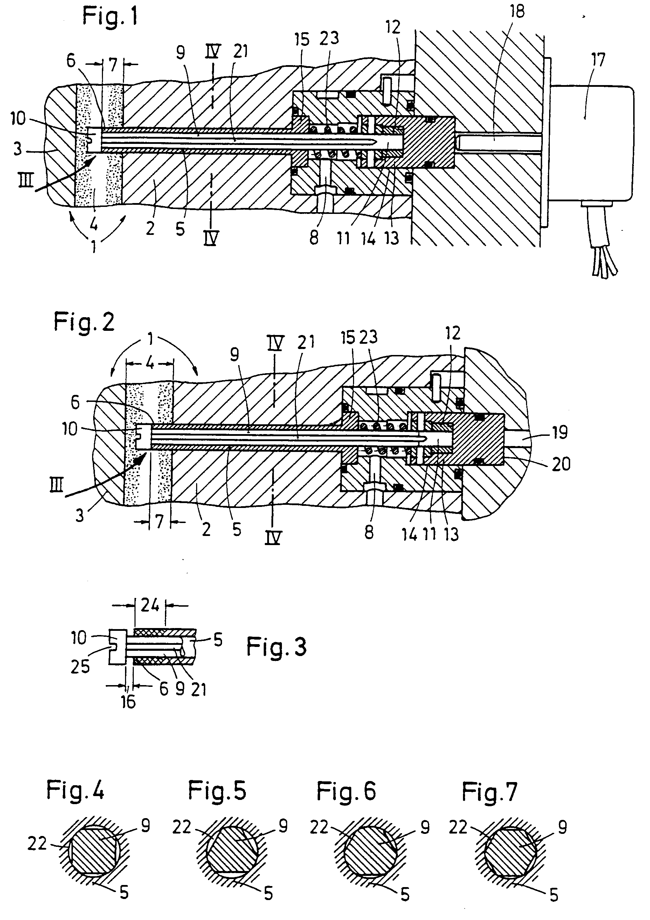

In den Fig. 1 und 2 der Zeichnung ist jeweils ein Formwerkzeug 1 zum Spritzgießen von Hohlräume enthaltenden Gegenständen aus Kunststoff gezeigt, welches zwei Formhälften 2 und 3 aufweist, die miteinander einen Formhohlraum 4 einschließen.

Durch eine (hier nicht gezeigte) Düse kann in den Formhohlraum 4 des Formwerkzeuges 1 plastifizierte Kunststoffschmelze eingespritzt werden. An einer von der (nicht gezeigten) Düse verschiedenen Stelle läßt sich in den Formhohlraum 4 durch eine Hohlnadel 5 ein weiteres unter Druck stehendes Medium, bspw. Luft, Gas oder auch Flüssigkeit, einspeisen.

Die Hohlnadel 5 ist beim gezeigten Beispiel in die Formhälfte 2 des Formwerkzeuges 1 stationär eingesetzt, wobei sie mit ihrem Mündungsende 6 um ein beträchtliches Maß 7 in den Formhohlraum 4 hineinragt. Durch einen Anschlußkanal 8 in der Formhälfte 2 kann dabei der Hohlnadel 5 das weitere, unter Druck stehende Medium zugeführt werden. Innerhalb der Hohlnadel ist ein Nadelkern 9 angeordnet, welcher einen vor dem Mündungsende 6 der Hohlnadel 5 liegenden, verdickten Kopf oder Teller 10 trägt, der einen Außendurchmesser hat, welcher wenigstens annähernd dem Außendurchmesser der Hohlnadel 5 entspricht. An dem vom Kopf oder Teller 10 abgewendeten Ende weist der Nadelkern 9 einen Gewindeabschnitt 11 auf, der in ein Mutterstück 12 eingeschraubt ist, welches wiederum unverdrehbar und axial unverschiebbar in einem Blockstück 13 sitzt, das wiederum begrenzt verschiebbar aber unverdrehbar in einer Büchse 14 der Formhälfte 2 aufgenommen ist. Eine Druckfeder 23 ist koaxial zum Nadelkern 9 zwischen der diesem zugewendeten Endfläche des Blockstücks 13 und einer Endverdickung 15 der Hohlnadel 5 aufgenommen und dabei so vorgespannt, daß der Nadelkern 9 mit seinem Kopf oder Teller 10 dicht gegen das Mündungsende 6 der Hohlnadel 5 angelegt und dieses somit vollständig verschlossen ist. Durch Verschieben des Nadelkerns 9 entgegen der Rückstellwirkung der Feder 23 kann der Kopf oder Teller 10 des Nadelkerns 9 vom Mündungsende 6 der Hohlnadel 5 abgehoben werden und zusammen mit diesem eine Mündungsöffnung in Form eines radial gerichteten Spaltventils 16 freigeben (Fig. 3), das dem Formhohlraum 4 zugewendet ist und sich in seinem Durchlaßquerschnitt durch Abstandsänderung des Kopfes oder Tellers 10 vom Mündungsende 6 der Hohlnadel 5 variieren läßt. Die größte Öffnungsweite des Spaltventils 16 wird dabei bestimmt durch den maximalen Verschiebeweg des Blockstücks 13 innerhalb der Büchse 14, d.h. wenn die linke Endfläche des Blockstücks 13 gegen die links Endfläche der Büchse 14 stößt, ist die maximale Öffnungsweite für das Spaltventil 16 erreicht.

Da die Druckfeder 23 über das Blockstück 13 und den Nadelkern 9 dessen Kopf oder Teller 10 immer dicht gegen das Mündungsende 6 der Hohlnadel 5 anzulegen und damit das Spaltventil 16 in Schließrichtung zu beaufschlagen sucht, ist zur Beaufschlagung desselben im Öffnungssinne ein fremdgesteuerter Kraftantrieb vorgesehen, welcher beim Ansführungsbeispiel nach Fig. 1 aus einem Elektromagneten 17 besteht, der auf das Blockstück 13 mit einem Stößel 18 einwirken kann. Als Kraftantrieb ist aber auch ein auf Spindel arbeitender Stellmotor einsetzbar, der dann die Bewegung des Nadelkerns 9 im Öffnungs- und im Schließsinne bewirken kann.

Beim Ausführungsbeispiel nach Fig. 2 ist der Kraftantrieb von einer Kolben-Zylinder-Einheit gebildet, bei der das Blockstück 13 den Kolben und die Büchse 14 den Zylinder bildet, wobei der Kolben an seinem Ende 20 durch den Kanal 19 mit Druckmittel beaufschlagt werden kann, um den Nadelkern 9 entgegen der Wirkung der Druckfeder 23 zu verschieben und damit das Spaltventil 16 zu öffnen.

Nahezu über die ganze Länge des Nadelkerns 9 erstreckt sich eine Längsnut bzw. ein Diametralschlitz 21, durch den das unter Druck stehende Medium vom anschlußkanal 8 aus bis zur Rückenfläche des Kopfes oder Tellers 10 am Nadelkern 9 gelangen kann. Nur wenn dort zwischen dem Mündungsende 6 der Hohlnadel 5 und dem Kopf oder Teller 10 des Nadelkerns 9 der Mündungsspalt des Spaltventils 16 geöffnet ist, kann das unter Druck stehende Medium in den Formhohlraum 4 des Formwerkzeuges 1 gelangen.

Wichtig ist, daß das Spaltventil 16 eine Ausbildung hat, die es zwar ermöglicht, das unter Druck stehende Medium in den Formhohlraum 4 einzuspeisen, welche jedoch verhindert, daß es sich in unerwünschter Weise mit Kunststoffschmelze zusetzen bzw. verstopfen kann.

Auch kommt es darauf an, daß sich der Nadelkern 9 mit Hilfe seines Gewindeabschnitts 11 im Mutterstück 12 so justieren läßt, daß unter alleiniger Vorspannwirkung der Druckfeder 23 und in der rechten Endstellung des Blockstücks bzw. Kolbens 13 entweder kein Mündungsspalt des Spaltventils 16 offen ist, zwischen dem Mündungsende 6 der Hohlnadel 5 und der Rückenfläche des Kopfes bzw. Tellers 10 also ein Maß 0 vorhanden ist, oder aber nur eine Spaltweite < 0,2 mm, vorzugsweise < 0,1 mm für den Mündungsspalt 16 erreicht werden kann. Nur wenn der Kolben bzw. das Blockstück durch den Kraftantrieb 17, 18 bzw. 19, 20 entgegen der Kraftwirkung der Druckfeder 23 in seine linke Endstellung gebracht ist, soll ein größerer Mündungsspalt des Spaltventils 16 einstellbar sein, welcher in der Zeiteinheit auch großen Mengen des unter Druck stehenden Mediums Durchlaß gewährt.

Abweichend von den in den Fig. 1 und 2 der Zeichnung dargestellten Ausführungsbeispielen ist es auch möglich, den Nadelkern 9 innerhalb der Hohlnadel 5 nahezu über seine ganze Länge in seinem Querschnitt so zu gestalten, wie das in den Fig. 4 bis 7 der Zeichnung erkennbar ist. Anstelle von Längsnut oder Diametralschlitz 21 lassen sich nämlich am Nadelkern 9 eine oder mehrere Umfangsabflachungen 22 vorsehen. Nach Fig. 4 sind dabei vier Umfangsabflachungen 22 in Umfangsrichtung gleichmäßig verteilt vorgesehen. Nach den Fig. 5 und 6 sind daran jeweils drei Umfangsabflachungen 22 vorhanden, während gemäß Fig. 7 acht Umfangsabflachungen 22 vorgesehen werden.

In allen Fällen ist es wichtig, daß sich nicht nur die Größe des Mündungsspaltes für das Spaltventil 16 bei unbetätigtem Kraftantrieb 17, 18 bzw. 19, 20 bedarfsabhängig und auf einfache Art und Weise einstellen läßt. Vielmehr kommt es auch wesentlich darauf an, daß das Mündungsende 6 der Hohlnadel 5 bei geöffnetem Formwerkzeug 1 von vorne, also vom geöffneten Formhohlraum 4 aus - zu Reinigungszwecken - völlig freigelegt werden kann. Deshalb ist der Nadelkern 9 an der Stirnfläche seines Kopfes oder Tellers 10 mit einem Werkzeugeingriff 25, bspw. einem Diametralschlitz oder einem Innensechskant ausgestattet. Dieser macht es möglich, den Gewindeabschnitt 11 des Nadelkerns 9 mit dem Innengewinde des Mutterstücks 12 in schwergängig verdrehbaren Eingriff zu bringen und auf diese Art und weise eine sichere Kupplung zwischen dem Nadelkern 9 und dem Blockstück 13 vorzusehen. Mit Hilfe eines Werkzeugs, bspw. eines Schraubendrehers oder eines Sechskant-Steckschlüssels läßt sich jedoch der Nadelkern 9 von dem Mutterstück 12 im Blockstück 13 lösen und anschließend der Nadelkern 9 axial nach vorne aus deren Hohlnadel 5 herausziehen. Nunmehr können im Bereich des Spaltventils 16 anhaftende Kunststoff-Rückstände problemlos entfernt und damit das Spaltventil 16 zwischen Hohlnadel 5 und Nadelkern 9 einwandfrei gereinigt werden.

Es sei hier noch erwähnt, daß es in manchen Fällen auch vorteilhaft sein kann, einen bestimmten, relativ kurzen, Längenbereich 24 der Hohlnadel 5, und zwar den Längenbereich 24, welcher sich unmittelbar an das Mündungsende 6 anschließt, nicht aus massivem Material zu fertigen, sondern vielmehr aus einem Sintermetall, das eine luft- oder gasdurchlässige Struktur hat.

Eine solche Hohlnadel 5 läßt sich in besonders vorteilhafter Weise dann benutzen, wenn im Formhohlraum 4 des Formwerkzeuges 1 Hohlräume enthaltende Gegenstände durch Spritzgießen aus Duroplast-Kunststoff oder Elastomer-Kunststoff hergestellt werden sollen. In diesem Falle braucht das Spaltventil 16 zwischen der Hohlnadel 5 und dem Kopf oder Teller 10 des Nadelkerns 9 nur für das Einspeisen großer Mengen des unter Druck stehenden Mediums geöffnet zu werden, während sich kleine Einspeisungsmengen durch den Sintermetallabschnitt problemlos durchsetzen lassen. Erst für die Druckentlastung des fertiggestellten Formteils, also nach genügender Verfestigung des dieses bildenden Duroplastes bzw. Elastomers ist hier ein Öffnen des Spaltventils mit Hilfe des fremdgesteuerten Kraftantriebs notwendig.

Es sei hier erwähnt, daß sich zwar die vorstehend beschriebenen Vorrichtungen in besonders vorteilhafter Weise zum Spritzgießen von Hohlräume enthaltenden Gegenständen einsetzen lassen, die aus Duroplast- oder Elastomer-Kunststoff bestehen. Selbstverständlich sind sie jedoch auch für den Einsatz beim Spritzgießen von Gegenständen aus Thermoplast-Kunststoff geeignet und vorgesehen.
Es sei hier auch noch darauf hingewiesen, daß sich die Anwendung der Erfindung nicht auf Vorrichtungen zum Spritzgießen von Hohlräume enthaltenden Gegenständen aus Kunststoff beschränkt, bei welchen die Hohlnadel 5 zur Zuführung eines zusätzlichen Druckmediums so feststehend montiert ist, daß sie mit ihrem vorderen Ende ständig in den Formhohlraum bzw. die Kavität 4 eines Formwerkzeuges 1 hineinragt. Es ist vielmehr auch möglich, die erfindungsgemäßen Ausgestaltungsmaßnahmen auch dort zu benutzen, wo Hohlnadeln zur Zuführung eines zusätzlichen Druckmediums benötigt werden, die relativ zum Formhohlraum bzw. zur Kavität 4 des Formwerkzeuges begrenzt axial verschiebbar vorgesehen, also zwischen einer vorgeschobenen Arbeitsstellung und einer zurückgezogenen Ruhestellung verlagerbar sind, wie das nach Fig. 3 der gattungsgemäßen DE-OS 39 36 289 der Fall ist.

Verfahrenstechnisch ist schließlich noch von Bedeutung, daß das den Formhohlraum bzw. die Kavität 4 des Formwerkzeuges 1 einzuspeisende weitere Medium zunächst unter Druck gegen das unter der Vorspannung der Druckfeder 23 in seiner Schließstellung gehaltene Spaltventil 16 gerichtet wird, das während und/oder nach dem Einspritzen von Duroplast- oder Elastomer-Kunststoff in den Formhohlraum bzw. die Kavität 4 des Formwerkzeuges 1 das Spaltventil 16 durch den fremdgesteuerten Kraftantrieb 17, 18 bzw. 19, 20 gegen die Vorspannung der Druckfeder 23 in den Formhohlraum bzw. die Kavität 4 geöffnet wird, um das unter Druck stehende Medium in den Duroplast- bzw. Elastomer-Kunststoff einzuführen, und daß dann das weitere Medium zeitverzögert druckentlastet sowie über das ausschließlich durch den fremdgesteuerten Kraftantrieb 17, 18 bzw. 19, 20 wiederum geöffnete Spaltventil 16 aus dem Formteil abgeführt wird.

Diese Verfahrensweise verhindert das unerwünschte Zusetzen der Hohlnadel mit Duroplast- bzw. Elastomer-Kunststoff und ermöglicht so das Spritzgießen von Hohlräume enthaltenden Gegenständen aus diesen Materialien.

Für die Arbeitsweise der Spritzgießvorrichtung, und zwar vornehmlich diejenige nach Fig. 2 ist es wichtig, daß zu einem bestimmten Zeitpunkt die thermoplastische Kunststoffschmelze durch die Düse in den Formhohlraum bzw. die Kavität 4 des Formwerkzeuges 1 eingespritzt und danach oder auch zeitüberlappend mit Hilfe der Hohlnadel 5 das weitere unter Druck stehende Medium in diese Kunststoffschmelze eingespeist wird. Damit das geschehen kann, muß zunächst das Spaltventil 16 geöffnet werden, indem durch den Kanal 19 eine Druckbeaufschlagung des Kolbenendes 20 bewirkt wird. Sobald sich das Spaltventil öffnet, wird das über den Anschlußkanal 8 unter Druck anstehende weitere Medium, z.B. Luft, Gas oder auch Flüssigkeit, in den Formhohlraum bzw. die Kavität 4 des Formwerkzeuges bzw. in die darin befindliche Kunststoffschmelze eingespeist. Dadurch wird die Kunststoffschmelze (auch Duroplast oder Elastomer) unter Hohlraumbildung gegen die Wandungsflächen des Formhohlraums bzw. der Kavität 4 verdrängt und durch den Mediendruck unter Bildung weitgehend gleicher Wanddicken an diese angelegt.

Durch die unterschiedlichen Flächenverhältnisse des Kolbenendes 20 und der ihm gegenüberliegenden - ringförmigen - Endfläche des Blockstücks 13 bleibt selbst bei gleichem Druck des am Anschlußkanal 8 anstehenden weiteren Mediums und des durch den Kanal 19 anstehenden Arbeitsmediums das Spaltventil 16 so lange geöffnet, bis das Arbeitsmedium entlastet wird.

Die Einwirkung des Arbeitsmediums auf das Kolbenende 20 bleibt jeweils so lange erhalten, wie das weitere Arbeitsmedium innerhalb des Formhohlraums bzw. der Kavität 4 Druck auf die Kunststoffschmelze ausüben soll, also auch so lange, wie dort ein Nachdruck aufrechterhalten werden muß. Erst dann erfolgt ein Druckabbau, und zwar sowohl am Anschlußkanal 8 für das weitere Medium als auch am Kanal 19 für das Arbeitsmedium.

Um abschließend eine Entlastung des Druckes des weiteren Mediums aus dem Formteil sicherzustellen, ist es dann erforderlich, das Spaltventil noch einmal durch Aufgabe von Arbeitsmedium auf das Kolbenende 20 zu öffnen, falls dieses nicht schon über den gesamten Zeitraum hinweg offengehalten war.

Das Auf- und Zusteuern des Spaltventils 16 sowie auch das Steuern des Durchlasses und des Druckaufbaus für das weitere Druckmedium können in der Weise bewirkt werden, wie das für den Jeweiligen Spritzvorgang optimal ist. So kann bspw. ermöglicht werden, daß der Druck des weiteren Mediums aufrechterhalten und als Nachdruck benutzt wird, wobei dann z.B. mit einem abfallenden Druckprofil gearbeitet wird.

Obwohl es bevorzugt wird, das weitere, unter Druck stehende Medium, wie z.B. Luft, Gas oder auch Flüssigkeit, an einer anderen Stelle als die Kunststoffschmelze in das Formwerkzeug 1 einzuspritzen, ist dies nicht in Jedem Falle eine Notwendigkeit. Es ist auch denkbar, daß bei rheologisch einwandfreier Ausbildung einer Einspritzdüse das Einspeisen des weiteren unter Druck stehenden Mediums auch direkt durch diese Einspritzdüse düse erfolgen kann, also an derselben Stelle, an welcher auch die Kunststoffschmelze zugeführt wird.

Ein wesentliches Kennzeichen der vorstehend beschriebenen Vorrichtung zum Spritzgießen von Hohlräume enthaltenden Gegenständen aus Kunststoff ist in jedem Fall, daß insbesondere für die Verarbeitung von Duroplasten und Elastomeren ein sehr enger Spalt für die Gaseintrittsöffnung am Spaltventil 16 eingestellt wird. Dieser Spalt muß deshalb eng sein, weil durch ihn die Einführung des unter Druck stehenden Mediums im Bereich der Schmelze erfolgen muß.

Vorzugsweise wird das unter Druck stehende Medium an einer anderen Stelle als der Kunststoff direkt in die Schmelze, d.h. in das heiße Werkzeug, eingespeist. Die gleichen Gesichtspunkte bezüglich der Einstellung eines sehr engen Spaltes sind jedoch auch dann wesentlich, wenn die Einspeisung des unter Druck stehenden weiteren Mediums direkt durch die Maschinendüse bewirkt wird.

Ein wesentliches Ausbildungskriterium ist in jedem Fall, daß das Spaltventil einen Spalt hat, welcher ohne Druckeinwirkung sehr klein ist, um einen Masseeintritt zu verhindern und welcher für die Einspeisung des unter Druck stehenden weiteren Mediums entweder infolge der Druckeinwirkung selbst oder durch Fremdsteuerung auf ein größeres Maß geöffnet werden kann. Im Falle der Fremdsteuerung ergibt sich der besondere Vorteil, daß der Spalt des Spaltventils auch zum Zwecke der Druckentlastung gezielt geöffnet werden kann.

Wird eine Duroplast- oder Elastomer-Schmelze in die Kavität bzw. den Formhohlraum 4 des Formwerkzeuges 1 eingebracht, dann ist auch wichtig, daß sich ein Druckaufbau in der Schmelze bildet und damit ein quellflußartiges Füllen der Kavität bzw. des Formhohlraums 4 erreicht wird. Findet hingegen die Füllung des Formhohlraums bzw. der Kavität 4 mit einer Block/Scherströmung statt, dann tritt in unerwünschter Weise das unter Druck stehende Medium infolge der nicht ausreichend verdichteten Masse bereits während des Füllvorgangs nach außen und deshalb kommt es nicht zu dem gewünschten Druckaufbau im Inneren des zu bildenden Formteils.

Insbesondere bei der Herstellung dickwandiger Formteile und bei der Verarbeitung von Kunststoffmassen, welche nicht zu einem Quellstromverhalten neigen, ist es daher vorteilhaft, vor dem Einspritzen der Kunststoffschmelze einen Druck im Formwerkzeug 1 aufzubauen, wie dies auch bei Thermoplast-Schaumspritzgießen, und zwar insbesondere bei der Spritzgieß-Variante mit Gasgegendruck seit längerer Zeit üblich ist. Durch Ausbildung eines Gegendruckes, welcher vorzugsweise < 100 bar ist, kann bei der Verarbeitung von Duroplasten und Elastomeren verhindert werden, daß die Fließfront auseinanderbricht und es zum Gasdurchbruch nach außen kommt.

Von Vorteil ist das Aufbringen eines Gasgegendruckes vor dem Einspritzen der Kunststoffschmelze in das Formwerkzeug auch dann, wenn dieses mehrere Kavitäten bzw. Formhohlräume aufweist. Es hat sich gezeigt, daß es hierdurch zu einer ausbalancierten, gleichmäßigen Füllung aller vorhandenen Kavitäten kommt.

Insbesondere wenn dickwandige Duroplast-Formteile ohne Gegendruck in mehrere Kavitäten gespritzt werden, dann kann es bei der für die spätere Einspeisung des unter Druck stehenden Mediums entscheidenden Teilfüllung zu Schwankungen der Füllgewichte der einzelnen Kavitäten kommen. Diese Füllgewicht-Schwankungen sind dabei durch die Charakteristik der verwendeten Formmassen begründet. Durch den Aufbau eines in allen Kavitäten bzw. Formhohlräumen gleichzeitig wirkenden Gegendruckes wird hingegen eine gleichmäßige Teilfüllung der einzelnen Kavitäten bzw. Formhohlräume erreicht und somit eine optimale Voraussetzung auch zur Herstellung von Formteilen aus Duroplasten und Elastomeren geschaffen, wenn diese mit gezielten Hohlräumen in Mehrfach-Formwerkzeugen gefertigt werden sollen.

Es ist auch möglich, im Formwerkzeug einen gezielten Gegendruck dadurch aufzubauen, daß Formwerkzeuge mit sogenannten Tauchkanten zum Einsatz gelangen. Bei derartigen Formwerkzeugen ist zunächst ein Kern in die Kavität bzw. in den Formhohlraum eingefahren, während die Kunststoffschmelze eingespritzt wird. Das unter Druck stehende weitere Medium gelangt dabei entweder durch die Maschinendüse selbst oder aber an einer anderen Stelle durch eine Hohlnadel in die Kavität bzw. den Formhohlraum. Bei der weiteren Medieneinspeisung wird dann der Werkzeugkern zurückgezogen und infolgedessen die Möglichkeit gegeben, daß innerhalb der Kunststoffschmelze ein Hohlraum entsteht. Bei noch weiterem Zurückziehen des Werkzeugkerns wird dann im entstehenden Formteil der komplette Hohlraum gebildet. Bei einem solchen mit sogenannten Tauchkanten arbeitenden Forwwerkzeug hat der bewegliche Werkzeugkern hauptsächlich die Aufgabe, in der Kavität bzw. dem Formhohlraum bei der Verarbeitung von Duroplasten und Elastomeren den Gegendruck aufzubauen.

Außer bei der Verarbeitung von Duroplast- und Elastomer-Kunststoffen, wie z .B. Gummi und Kautschuk, lassen sich Vorrichtungen der vorstehend beschriebenen Bauart und Wirkungsweise auch bei der Verarbeitung aller härtbaren Kunststoffe in Benutzung nehmen.

Wenn das unter Druck stehende Medium, welches in die Kavität bzw. den Formhohlraum eingespritzt wird, vorgeheizt ist, bspw. auf eine Temperatur, die der Temperatur des Formwerkzeuges ähnlich ist, also bei etwa 160 bis 180 °C liegt, dann läßt sich damit eine deutlich kürzere Aushärtezeit für duroplastische Kunststoffe erzielen. Dieser Vorteil resultiert daraus, daß Wärmeeinwirkung nicht nur von außen durch das geheizte Formwerkzeug, sondern auch von innen durch das vorgeheizte, unter Druck stehende Medium auf das Kunststoffmaterial stattfindet. Die Reaktionszeiten und somit die Aushärtezeiten der auf diese Weise hergestellten Formteile lassen sich wesentlich gegenüber denjenigen Fällen verkürzen, bei denen das betreffende Medium nur mit Raumtemperatur eingespeist wird.

Die Aufheizung des Mediums kann bspw. nach dem Prinzip des Wärmetausches erfolgen. Für die Aufheizung desselben können aber auch elektrische Heizelemente oder durch Strahlung erwärmte Rohrleitungen von ausreichender Länge eingesetzt werden.

Anstelle von Formwerkzeugen mit Tauchkanten lassen sich auch Formwerkzeuge mit Prägekernen, Formwerkzeuge mit Seitenschiebern, Formwerkzeuge mit Schiebern im Werkzeug oder mit Teilen des Werkzeuges, die verfahren werden können, in Benutzung zu nehmen.

Formwerkzeuge mit Tauchkernen oder Tauchkanten lassen sich mit oder ohne Gegendruck einsetzen, wobei der Druck allein über das Werkzeug erzeugt werden kann oder auch noch zusätzlich durch Medien-Gegendruck.

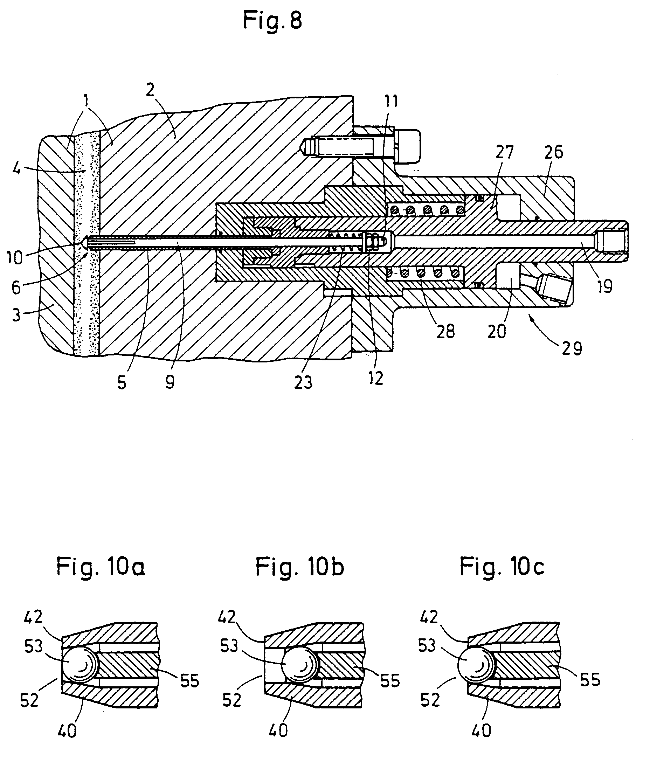

In Figur 8 ist eine Vorrichtung zum Spritzgießen von Hohlräume enthaltenden Gegenständen aus Kunststoff zu sehen, die sich von denjenigen nach Figur 1 und 2 dadurch unterscheidet, daß sie eine axial verschiebbare zum Formhohlraum bzw. zur Kavität 4 des Formwerkzeuges 1 angeordnete Hohlnadel 5 aufweist. Sie arbeitet dazu mit einem zusätzlichen Stellantrieb 22. Dieser greift über einen in einem Zylinder 26 durch Druckmitteleinwirkung verschiebbaren Kolben 27 an der Hohlnadel 5 an und kann diese gegen die Wirkung einer Rückstellfeder 28 in den Formhohlraum 4 zeitweilig vorschieben.

Zur Beaufschlagnng des Kolbens 27 kann das unter Druck stehende Medium benutzt werden, welches auch durch die Hohlnadel 5 in den Formhohlraum 4 eingespeist wird.

Natürlich ist aber auch hier die Möglichkeit gegeben, die Beaufschlagung des Kolbens 27 durch ein anderes, fremdbeeinflußtes Medium zu bewirken. Die Arbeitsweise von Hohlnadel 5 und Nadelkern 9 sind in Jedem Falle mit derjenigen der Ausführnngsbeispiele nach den Figuren 1 bis 3 identisch.

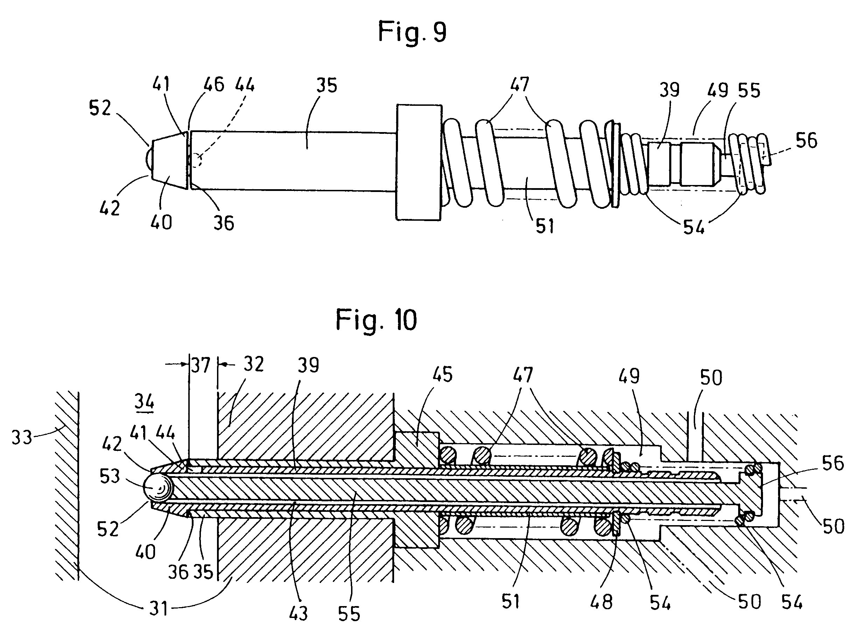

Bei der aus den Figuren 9 und 10 ersichtlichen Vorrichtung zum Spritzgießen von Hohlraum enthaltenen Gegenständen aus Kunststoff besteht das Formwerkzeug 31 aus den beiden Formhälften 32 und 33, die zwischen sich den Formhohlraum bzw. die Kavität 34 einschließen. In die Kavität 34 ragt dabei, bspw. durch die Hälfte 32 die Hohlnadel 35 mit ihrem Mündungsende 36 um ein Maß 37 hinein, welches, bspw. mindestens gleich der Randstärke des fertig ausgeformten Gegenstandes aus Kunststoff bemessen ist.

Innerhalb der Hohlnadel 35 ist ein Nadelkern 39 angeordnet, welcher einen vor dem Mündungsende 36 der Hohlnadel 35 liegenden Kopf 40 trägt. Dieser Kopf 40 kann dabei kegelstumpfförmig gestaltet sein; er kann aber auch jede andere geeignete Ausbildung erhalten. Er hat an der dem Mündungsende 36 der Hohlnadel 35 zugewendeten Seite eine Ringschulter 41, die sich als Dichtungsanschlag gegen das Mündungsende 36 der Hohlnadel 35 anlegen kann. Der größte Durchmesser des kegelstumpfförmigen Kopfes 40 ist im Bereich der Ringschulter 41 auf den Außendurchmesser der Hohlnadel 35 abgestimmt, während das vom Mündungsende 36 abgewendete Ende 42 des Kopfes 40 den kleineren Durchmesser hat.

Der Nadelkern 39 ist über seine gesamte Länge hinweg, also auch im Bereich seines Kopfes 40 durchgehend hohl bzw. rohrförmig ausgebildet. Er hat also einen Durchgang 43, wie das deutlich in Figur 10 zu sehen ist. Unmittelbar hinter der Ringschulter 41 des Kopfes 40 ist der Nadelkern 39 entweder mit mindestens einer Öffnung 44 versehen, die in den Durchgang 43 einmündet, oder aber zwischen seinem Außenumfang und dem Innenumfang der Hohlnadel 35 ist ein sich in Axialrichtung bis in einen Hohlraum 49 führender Spalt vorhanden, der in ähnlicher Weise geschaffen werden kann, wie das aus den Fig. 1 bis 7 hervorgeht. Bei der Benutzung mindestens einer in den Durchgang 43 einmündenden Öffnung 44 kann diese radial zur Längsachse des Nadelkerns 39 gerichtet sein, jedoch auch eine Schräglage hierzu erhalten. In jedem Falle ist es wichtig, daß die Öffnung 44 oder der Spalt nach außen durch die Hohlnadel 35 abgesperrt wird, wenn der Nadelkern 39 mit der Ringschulter 41 seines Kopfes 40 dicht am Mündungsende 36 der Hohlnadel 35 anliegt, wie das die Figur 10 der Zeichnung zeigt. Wird aber der Nadelkern 39 innerhalb der Hohlnadel 35 aus der Stellung nach Figur 10 in die Stellung nach Figur 9 - also nach links - verschoben, dann öffnet sich zwischen der Ringschulter 41 am Kopf 40 des Nadelkerns 39 und dem Mündungsende 36 der Hohlnadel 35 ein radiales Spaltventil 46, wie es in Figur 9 zu sehen ist. Durch die Öffnungen 44 oder den Spalt am Umfang des Nadelkerns 39 kann dann das Spaltventil 46 aus dem Durchlaß 43 oder dem Hohlraum 49 heraus mit dem unter Druck stehenden Medium gespeist werden, wobei dieses in den Formhohlraum bzw. die Kavität 34 des Formwerkzeuges 31 eintritt.

Mit einer Endverdickung 45 stützt sich die Hohlnadel 35, vorzugsweise unter Zwischenschaltung einer Dichtung, axial an der Formhälfte 32 ab, und dient selbst als Widerlager für das eine Ende einer Druckfeder 47, die mit ihrem anderen Ende auf eine Anschlagscheibe 48 einwirkt, welche axial unverschiebbar mit dem Nadelkern 39 in Eingriff steht. Mit Hilfe der Druckfeder 47 wird dadurch der Nadelkern 39 ständig so beaufschlagt, daß die Ringschulter 41 seines Kopfes 40 das zusammen mit dem Mündungsende 36 der Hohlnadel 35 gebildete, radiale Spaltventil 46 in Schließlage zu halten sucht.

Die Anschlagscheibe 48 ist so in einem Hohlraum 49 untergebracht, daß sie an ihrer von der Druckfeder 47 abgewendeten Seite mit dem in den Formhohlraum bzw. die Kavität 34 einzuspeisenden Druckmedium beaufschlagt werden kann, das bspw. durch einen Kanal 50 in den Hohlraum 49 gelangt. Das auf die Anschlagscheibe 48 einwirkende Druckmedium kann dabei die Rückstellkraft der Druckfeder 47 überwinden und die Anschlagscheibe 48 bis gegen eine an der Endverdickung 45 abgestützte Anschlaghülse 51 schieben, mittels welcher dann die Öffnungsweite des Spaltventils 46 exakt bestimmt wird.

An seinem über das Spaltventil 46 hinausreichenden Ende 42 ist der Nadelkern 39 mit einem weiteren Ventil 52 ausgestattet, welches mit dem dort gelegenen Ende des Durchgangs 43 im Nadelkern 39 zusammenwirkt. Das weitere Ventil 52 entfaltet dabei seine Wirkung innerhalb des Kopfes 40 des Nadelkern 39 und arbeitet mit einer im Bereich des Mündungsendes 42 des Durchgangs 43 axial verlagerbaren Kugel 53. Das Schließen des weiteren Ventils 52 geschieht zum einen unter der Einwirkung des im Durchgang 43 aus dem Hohlraum 49 unter Druck anstehenden Mediums, welches die Kugel 53 im Schließsinne - nach links - verlagert. Zum anderen wirkt auf die Kugel 53 im Schließsinne aber auch eine Zugfeder 54 ein, die an einem Stift 55 angreift, welcher - wiederum nach links - gegen die Kugel 53 drückt und diese dann formschlüssig gegen den Sitz am Mündungsende 42 des Durchgangs 43 preßt, so daß das weitere Ventil 52 gasdicht wird.

Unter der Einwirkung der Zugfeder 54 und des Stiftes 55 bleibt das weitere Ventil 52 auch dann geschlossen, wenn ein Druckausgleich zwischen dem durch den Kanal 50 in den Hohlraum 49 eingespeisten Druckmedium im Formhohlraum bzw. in der Kavität 34 des Formwerkzeugs 31 erreicht wird. Andererseits wird jedoch das Ventil 52 durch Axialverlagerung seiner Kugel 53 nach rechts geöffnet, sobald eine Druckentlastung des im Hohlraum 49 anstehenden Mediums durch den Kanal 50 herbeigeführt wird. In diesem Falle wirkt dann nämlich der im Formhohlraum 34 bzw. in der Kavität des Formwerkzeuges 1 anstehende Mediendruck auf die Kugel 53 des weiteren Ventils 52 ein und schiebt diese gegen die Wirkung der am Stift 55 angreifenden Zugfeder 54 nach rechts. Die Kugel 53 hebt sich daher vom Sitz am Mündungsende 42 im Durchgang 43 des Nadelkerns 39 ab und macht folglich den Durchgang 43 für eine Druckentlastung des Hohlraums im fertiggestellten Kunststoff-Gegenstand frei.

Es ist erkennbar, daß der Stift 55 im Durchgang 43 des Nadelkerns mit einem Axialspiel aufgenommen ist und daß die Zugfeder 54 an einem von der Kugel 53 des Ventils 52 abgewendeten, kolbenartig verdickten Ende 56 des Stiftes 55 angreift, welches außerhalb des rechten Endes des Nadelkerns 39 innerhalb des Hohlraums 49 liegt.

Das von der Hohlnadel 35 abgewendete - rechte - Ende des mit ihr korrespondierenden Hohlraums 49 kann, wie in Fig. 10 gezeigt, einen verengten Querschnitt aufweisen. Es kann jedoch auch den gleichen Querschnitt wie dieser haben.

In den Hohlraum 49 mündet mindestens ein Kanal 50, der das unter Druck stehende Medium führt. Dieser Kanal 50 kann dabei radial von der Seite her in den Hohlraum 49 gerichtet sein, wie das durch voll ausgezogene Linien angedeutet ist. Er kann aber auch schräg oder koaxial in den Hohlraum 49 gerichtet sein, wie das in Fig. 10 jeweils durch strichpunktierte Linien angedeutet ist.

Das Ventil 52 hat - wie bereits erwähnt wurde - hauptsächlich die Aufgabe, nach dem Schließen des Spaltventils 46 die Druckentlastung des Hohlraums im fertiggestellten Kunststoffteil zu ermöglichen und dabei die Rückführung bzw. Wiedergewinnung des in diesem Hohlraum befindlichen Mediums durch den Durchgang 43 im Nadelkern 39 der Vorrichtung zu bewirken.

Die Arbeitsweise der vorstehend anhand der Figuren 9 und 10 erläuterten Vorrichtung zum Spritzgießen von Hohlräume enthaltenen Gegenständen aus Kunststoff ist folgende:

Sofern kein unter Druck stehendes Medium über den Kanal 50 im Hohlraum 49 ansteht, ist das radiale Spaltventil 46 durch die zwischen dem Nadelkern 39 und der Hoblnadel 35 wirksame Druckfeder 47 geschlossen; d. h., sein Ventilspalt zwischen der Ringschulter 41 des Kopfes 40 am Nadelkern 39 und dem Mündungsende 36 der Hohlnadel 35 hat eine Spaltweite mit dem Maß 0. Das Spaltventil 46 bzw. sein Ventilspalt kann sich daher nicht in unerwünschter Weise mit Kunststoffschmelze zusetzen, bzw. verstopfen.

Bei Eintritt des unter Druck stehenden Mediums in den Kanal 50 und den Hohlraum 49 wird der Nadelkern 39 der Hohlnadel 35 durch den sich aufbauenden und gegen die Anschlagscheibe 48 wirkenden Druck unter Überwindung der Rückstellkraft der Druckfeder 47 nach links bzw. vorne bewegt, und zwar um ein Maß, welches durch die Hülse 51 begrenzt ist. Damit öffnet sich dann das Spaltventil 46; es entsteht ein radialer Ventilspalt vorbestimmter Größe, durch den das unter Druck stehende Medium in die im Formhohlraum bzw. in der Kavität 34 befindliche Schmelze eintreten kann. Der Druck des im Hohlraum 49 anstehenden Mediums wirkt über den Durchgang 43 im Nadelkern 39 aber auch auf die Kugel 53 des weiteren Ventils 52 ein, und zwar in der Weise, daß die Kugel 53 den Durchgang 43 an dem über das Spaltventil 46 hinausreichenden Ende des Nadelkerns 39 gasdicht abschließt.

Für die Dauer der Aufrechterhaltung eines Nachdrucks im Formhohlraum bzw. in der Kavität 34 des Formwerkzeugs 31 wird über den Kanal 50 und den Hohlraum 49 das Medium unter dem jeweils vorgegebenen bzw. vorgebbaren Wirkdruck gehalten. Findet Jedoch im Kanal 50 und folglich im Hohlraum 49 eine Druckentlastung statt, dann schließt sofort das Spaltventil 46 unter der Wirkung der Rückstellkraft der Druckfeder 47, d. h., sein radialer Ventilspalt geht auf das Maß 0 zurück. Aufgrund der Druckentlastung des Mediums im Hohlraum 49 wird zugleich aber auch dessen Wirkung auf die Kugel 53 des weiteren Ventils 52 aufgehoben. Die Kugel 53 wird dann aus dem Formhohlraum bzw. der Kavität 34 des Formwerkzeugs 31 heraus mit noch dort anstehenden Mediendruck beaufschlagt und folglich im Öffnungssinne -nach rechts - von dem Sitz am Mündungsende 42 des Durchgangs 43 abgehoben. Das Abheben der Kugel 43 vom Sitz des weiteren Ventils 52 findet unter Axialverschiebung des Stiftes 55 gegen die Wirkung der Zugfeder 54 - nach rechts - statt. Dadurch kann sich dann der im Formhohlraum bzw. der Kavität 34 des Formwerkzeuges 31 herrschende Mediendruck langsam - unter Rückgewinnung des Mediums - über den Durchlaß 43 im Nadelkern 39 abbauen.

In gleicher Weise wie bei den anhand er Fig. 1 bis 8 erläuterten Bauformen von Spritzgießvorrichtungen können auch bei der Bauform nach den Fig. 9 und 10 die zwischen der Hohlnadel 35 und dem Nadelkern 39 befindlichen Federmittel 47 die Mündungsöffnung des Spaltventils 46 im Schließsinne beeinflussen, während sich der Nadelkern durch das im Hohlraum 49 unter Druck anstehende Medium gegen die Federmittel im Öffnungssinne verschieben läßt. Die weiterhin zwischen dem Nadelkern 39 und dem Stift 55 wirksame Zugfeder 54 sind ebenfalls bestrebt, das weitere Ventil 52 ständig im Schließsinne zu halten.

Als Folge des über den Kanal 50 im Hohlraum 49 aufgebauten Mediendruckes wird eine nach links gerichtete Vorwärtsbewegung des Nadelkerns 39 zusammen mit dem darin koaxial angeordneten Stift 55 entgegen der Wirkung der Druckfeder 47 hervorgebracht. Während sich dabei das Spaltventil 46 öffnet, verbleibt gleichzeitig das weitere Ventil 52 in seiner Absperrstellung. Das unter Druck stehende Medium tritt durch das Spaltventil 46 in den Formhohlraum bzw. die Kavität 34 des Formwerkzeuges 31 und somit auch in die darin befindliche Kunststoffschmelze ein.

Nach Ablauf der jeweils im Formhohlraum bzw. in der Kavität 34 wirksam gemachten Medien-Nachdruckzeit wird der Mediendruck im Hohlraum 49 über den Kanal 50 abgesenkt. Als Folge des im Hohlraum 49 abfallenden Druckes wird die vorgespannte Druckfeder 47 entlastet und schließt somit das Spaltventil 46 zwischen dem Nadelkern 39 und der Hohlnadel 35. Durch dieses Spaltventil 46 kann daher das im Formhohlraum bzw. in der Kavität 34 anstehende Medium nicht mehr entweichen. Es stellt sich jedoch ein Druckgefälle zwischen dem Formhohlraum bzw. der Kavität 34 des Formwerkzeuges 31 und dem Hohlraum 49 ein. Der im Formhohlraum bzw. in der Kavität 34 anstehende Mediendruck beaufschlagt die Kugel 53 des weiteren Ventils 52 und verlagert diese - nach rechts - unter gleichzeitiger Verschiebung des Stiftes 55 gegen die Wirkung der Zugfeder 54. Der Durchgang 43 in der Hohlnadel 39 öffnet sich und es findet ein Druckabbau aus dem Formhohlraum bzw. der Kavität zum Hohlraum 49 hin so lange statt, bis die Rückstellkraft der Zugfeder 54 im Gleichgewicht mit der Kraft gelangt, die vom Medium auf die Kugel 53 in entgegengesetzter Richtung ausgeübt wird.

Der noch im Formhohlraum bzw. in der Kavität 34 verbleibende, geringe Restdruck des Mediums wird beim Entformen des Kunststoffteils und somit beim Entfernen der Vorrichtung aus dem Formwerkzeug vollständig abgebaut.

Es sei hier nochmals ausdrücklich erwähnt, daß die in Fig. 10 gezeigte Ausstattung des Nadelkerns 39 im Bereich des Spaltventils 46 mit radialen Öffnungen 44 nicht obligatorisch ist. Die Öffnungen 44 können dort auch mit Schräglage in den Durchgang 43 des Nadelkerns 39 einmünden. In Anlehnung an die Bauformen der Fig. 1 bis 8 können die Öffnungen 44 aber auch gänzlich in Wegfall kommen, wenn zwischen dem Innenumfang der Hohlnadel 35 und dem Außenumfang des Nadelkerns 39 in Achsrichtung Durchlässe zum Hohlraum 49 geschaffen sind, die einen Strömungsweg für das unter Druck stehende Medium zum Spaltventil 46 hin bilden. In diesem Falle ist der Durchgang 43 im Nadelkern 39 nur dazu dienlich, bei geöffnetem weiterem Ventil 52 die Rückströmung bzw. Druckentlastung des Mediums aus dem Formhohlraum bzw. der Kavität 34 des Formwerkzeugs 31 zuzulassen.

Erwähnt sei hier abschließend auch noch, daß durchaus die Möglichkeit gegeben ist, die bei der Bauform der Spritzgießvorrichtung nach den Fig. 9 und 10 zwischen der Hohlnadel 35 und dem Nadelkern 39 vorhandene Anschlaghülse 51 auch bei den Spritzgießvorrichtungen in Benutzung zu nehmen, welche in den Fig. 1, 2 und 8 der Zeichnung gezeigt sind. Hier wird dann diese Anschlaghülse koaxial zur Druckfeder 23 und zum Nadelkern 9 hinter der Endverdickung 15 der Hohlnadel 5 eingebaut.

Beim Spritzgießen von Kunststoff-Formteilen mit darin durch eingebrachten Mediendruck ausgebildeten Hohlräumen geht das bestreben dahin, den Formhohlraum bzw. die Kavität möglichst druckarm mit Kunststoffschmelze zu füllen, so daß dem Öffnen des weiteren Ventils während dieses Füllvorgangs vorgebeugt ist.

Werden jedoch zum Füllen des Formhohlraums bzw. der Kavität 34 höhere Schmelzedrücke nötig, bevor der Druck des weiteren Mediums in den Formhohlraum bzw. die Kavität wirkt, dann wird bereits während der Füllphase mit Schmelze im Hohlraum 49 der Vorrichtung nach den Fig. 9 und 10 ein Mediendruck aufgebaut, der zwar das weitere Ventil 52 in sicherer Schließlage hält, welcher andererseits jedoch nicht ausreicht, um das Spaltventil 46 gegen die Vorspannkraft des Federmittels 47 zu öffnen.

Auch die anhand der Fig. 9 und 10 dargestellte und beschriebene Bauform einer Spritzgießvorrichtung läßt sich also in vorteilhafter Weise an alle vorkommenden Betriebszustände problemlos anpassen.

Die Fig. 10a bis 10c zeigen, daß das weitere Ventil 52 verschiedene Ausbildungen erhalten kann.

Während nach Fig. 10a der konische Sitz für die Ventilkugel 53 so am Ende des Durchgangs 43 liegt, daß die Ventilkugel 53 in ihrer Absperrstellung bündig mit dem Ende 42 des Nadelkerns 39 abschließt, ist er nach Fig. 10b so gelegt, daß die Ventilkugel 53 in ihrer Schließlage noch einen relativ großen Abstand vom Ende 42 des Nadelkerns 39 hat. Nach Fig. 10c ist der konische Sitz im Durchgang 43 so gestaltet, daß die Ventilkugel 53 in ihrer Absperrstellung über das Ende 42 des Nadelkerns 39 vorsteht.

### Liste der Bezugszeichen

- 1: Formwerkzeug
- 2: Formhälfte
- 3: Formhälfte
- 4: Formhohlraum
- 5: Hohlnadel
- 6: Mündungsende
- 7: Maß
- 8: Anschlußkanal
- 9: Nadelkern
- 10: Kopf oder Teller
- 11: Gewindeabschnitt
- 12: Mutterstück
- 13: Blockstück/Kolben
- 14: Büchse/Zylinder
- 15: Endverdickung
- 16: Spaltventil
- 17: fremdgesteuerter Kraftantrieb/Elektromagnet
- 18: Stößel
- 19: Kolbenende
- 20: Kanal
- 21: Längsnut/Diametralschlitz
- 22: Stellantrieb
- 23: Druckfeder
- 24: Längenbereich
- 25: Werkzeugeingriff
- 26: Zylinder
- 27: Kolben
- 28: Feder
- 29: Stellantrieb
- 31: Formwerkzeug
- 32: Formhälfte
- 33: Formhälfte
- 34: Formhohlraum
- 35: Hohlnadel
- 36: Mündungsende
- 37: Maß
- 39: Nadelkern
- 40: Kopf
- 41: Ringschulter
- 42: Ende
- 43: Durchgang
- 44: Radialdurchlaß
- 45: Endverdickung
- 46: Spaltventil
- 47: Druckfeder
- 48: Anschlagscheibe
- 49: Hohlraum
- 50: Anschlußkanal
- 51: Distanzhülse
- 52: weiteres Ventil
- 53: Ventilkugel
- 54: Zugfeder
- 55: Stift
- 56: Endverdickung des Stiftes

## Patentansprüche

1. Vorrichtung zum Spritzgießen von Hohlräume enthaltenden Gegenständen aus Kunststoff in einem Formwerkzeug (1), dessen Formhohlraum bzw. Kavität (4) einerseits die Kunststoffschmelze durch eine Düse zuzuführen ist und der bzw. die andererseits an einer von der Düse verschiedenen Stelle durch eine Hohlnadel (5) mit einem weiteren unter Druck stehenden Medium, wie z.B. Luft, Gas oder auch Flüssigkeit, beaufschlagbar ist, wobei in der Hohlnadel (5) ein begrenzt axial verschiebbarer Nadelkern (9) angeordnet und über diesen Nadelkern (9) die Mündungsöffnung der Hohlnadel (5) zum Formhohlraum bzw. zur Kavität (4) hin in ihrem Durchlaßquerschnitt variierbar bzw. öffen- und schließbar ist, wobei der Nadelkern (9) mit dem Mündungsende der Hohlnadel ein radial gerichtetes Spaltventil (16) bildet, wobei der Nadelkern (9) einen vor dem Mündungsende der Hohlnadel (5) liegenden, verdickten Kopf oder Teller (10) trägt, dessen Außendurchmesser wenigstens annähernd dem Außendurchmesser der Hohlnadel (5) entspricht, und wobei der Nadelkern (9) relativ zur Hohlnadel durch Federmittel (23) axial abgestützt ist,
**dadurch gekennzeichnet,**
daß die Federmittel (23) ständig im Schließsinne der Mündungsöffnung bzw. des Spaltventils (16) am Nadelkern (9) angreifen (11, 12, 13),
und daß der Nadelkern (9) gegen die Federmittel im Öffnungssinne begrenzt verschiebbar ist.

2. Vorrichtung nach Anspruch 1,
**dadurch gekennzeichnet,**
daß ein fremdgesteuerter Kraftantrieb (17, 18) für den Nadelkern (9) vorgesehen und entgegengesetzt zu den Federmitteln wirksam ist (Fig. 1).

3. Vorrichtung nach Anspruch 1,
**dadurch gekennzeichnet,**
daß als fremdgesteuerter Kraftantrieb (19, 20) für den Nadelkern (9) entweder ein Elektromagnet (17) mit einem gegen das hinteren Ende des Nadelkerns (9) gerichteten Stößel (18) oder eine mit Druckmittel beaufschlagbare Kolben-Zylinder-Einheit (19, 20) am hinteren Ende des Nadelkerns (9) angreift (11, 12, 13).

4. Vorrichtung nach Anspruch 3,
**dadurch gekennzeichnet,**
daß der Nadelkern (9) mit seinem hinteren Ende (11) in einen Kolben (13) eingesetzt ist, der begrenzt axial verschieblich in einer Zylinderbohrung (14) aufgenommen ist, daß die Federmittel (23) zwischen der Rückseite des Kolbens (13) und einer Endverdickung (15) der Hohlnadel (9) eingespannt sind sowie den Nadelkern (9) konzentrisch umgeben, und daß die Einspeisungsstelle (8) für das unter Druck stehende Medium dem Einbaubereich der Federmittel (23) zugeordnet ist.

5. Vorrichtung nach einem der Ansprüche 1 bis 4,
bei der ein Kopf oder Teller des Nadelkerns mit dem Mündungsende der Hohlnadel ein, z. B. radial gerichtetes Spaltventil bildet,
**dadurch gekennzeichnet,**
daß das Spaltventil (16) auch in der durch die Federmittel (23) gehaltenen Grundstellung des Nadelkerns (9) einen Mündungsspalt vorgebbarer Größe, z.B. < 0,2 mm, offenläßt.

6. Vorrichtung nach einem der Ansprüche 1 bis 4,
bei der ein Kopf oder Teller des Nadelkerns mit dem Mündungsende der Hohlnadel ein, z.B. radial gerichtetes Spaltventil bildet,
**dadurch gekennzeichnet,**
daß am Spaltventil (16) in der durch die Federmittel (23) gehaltenen bzw. vorgespannten Grundstellung des Nadelkerns (9) ein Mündungsspalt mit Größe 0 vorgegeben bzw. eingestellt ist.

7. Vorrichtung zum Spritzgießen von Hohlräume enthaltenden Gegenständen aus Kunststoff in einem Formwerkzeug, dessen Formhohlraum bzw. Kavität einerseits die Kunststoffschmelze durch eine Düse zuzuführen ist und der bzw. die andererseits an einer von der Düse verschiedenen Stelle durch eine Hohlnadel mit einem weiteren unter Druck stehenden Medium, wie z.B. Luft, Gas oder auch Flüssigkeit, beaufschlagbar ist, wobei in der Hohlnadel ein begrenzt axial verschiebbarer Nadelkern angeordnet und über diesen Nadelkern die Mündungsöffnung der Hohlnadel zum Formhohlraum bzw. zur Kavität hin in ihrem Durchlaßquerschnitt variierbar bzw. öffen- und schließbar ist,
wobei der in der Hohlnadel befindliche Nadelkern mit dem Mündungsende der Hohlnadel ein, z. B. radial gerichtetes Spaltventil bildet, wobei der Nadelkern einen vor dem Mündungsende der Hohlnadel liegenden, verdickten Kopf oder Teller trägt, dessen Außendurchmesser wenigstens annähernd dem Außendurchmesser der Hohlnadel entspricht, und wobei der Nadelkern mit seinem hinteren Ende in einer gegen das hintere Ende der Hohlnadel abgestützten Fassung festgelegt ist, insbesondere nach einem der Ansprüche 1 bis 6,
**dadurch gekennzeichnet,**
daß der Nadelkern (9) vom Mündungsende (6) der Hohlnadel (5) aus und durch diese hindurch lösbar (11, 12) mit der Fassung (13) gekuppelt ist.

8. Vorrichtung nach Anspruch 7,
**dadurch gekennzeichnet,**
daß die Kupplung von einem Gewindeabschnitt (11) am hinteren Ende des Nadelkerns (9) und einem Mutterstück (12) in der Fassung (13) gebildet ist und diese Kupplung (11, 12) über einen Werkzeugeingriff (25). z.B. einen Diametralschlitz oder einen Innensechskant betätigbar ist, der sich stirnseitig im Kopf oder Teller (10) des Nadelkerns (9) befindet.

9. Vorrichtung nach Anspruch 7,
**dadurch gekennzeichnet,**
daß als Kupplungsmittel zwischen dem hinteren Ende des Nadelkerns (9) und der Fassung (23) eine Renkverbindung bzw. ein Bajonettverschluß vorgesehen ist.

10. Vorrichtung nach Anspruch 7,
**dadurch gekennzeichnet,**
daß als Kupplungsmittel zwischen dem hinteren Ende des Nadelkerns (9) und der Fassung (23) Klemmkörper vorgesehen sind.

11. Vorrichtung zum Spritzgießen von Hohlräume enthaltenden Gegenständen aus Kunststoff in einem Formwerkzeug, dessen Formhohlraum bzw. Kavität einerseits die Kunststoffschmelze durch eine Düse zuzuführen ist und der bzw. die andererseits an einer von der Düse verschiedenen Stelle durch eine Hohlnadel mit einem weiteren unter Druck stehenden Medium, wie z.B. Luft, Gas oder auch Flüssigkeit, beaufschlagbar ist, wobei in der Hohlnadel ein begrenzt axial verschiebbarer Nadelkern angeordnet und über diesen Nadelkern die Mündungsöffnung der Hohlnadel zum Formhohlraum bzw. zur Kavität hin in ihrem Durchlaßquerschnitt variierbar bzw. öffen- und schließbar ist, wobei der Nadelkern mit dem Mündungsende der Hohlnadel ein, z. B. radial gerichtetes Spaltventil bildet, wobei der Nadelkern einen vor dem Mündungsende der Hohlnadel liegenden, verdickten Kopf oder Teller trägt, dessen Außendurchmesser wenigstens annähernd dem Außendurchmesser der Hohlnadel entspricht, und wobei der Nadelkern relativ zur Hohlnadel axial abgestützt ist,
**dadurch gekennzeichnet,**
daß die Abstützung für den Nadelkern (9) aus einem sowohl im Schließsinne als auch im Öffnungssinne betätigbaren Kraftantrieb besteht.

12. Vorrichtung nach den Ansprüchen 1 bis 3 und 11,
**dadurch gekennzeichnet,**
daß als Kraftantrieb ein Motorantrieb mit Spindeln, also ein sogenannter Stellantrieb, vorgesehen ist.

13. Vorrichtung nach Anspruch 2 und 11,
**dadurch gekennzeichnet,**
daß als fremdgesteuerter Kraftantrieb für den Nadelkern eine mit Druckmittel beaufschlagbare Membran vorgesehen ist.

14. Vorrichtung nach einem der Ansprüche 1 bis 4 und 6 sowie 11 bis 13,
**dadurch gekennzeichnet,**
daß auch der Nadelkern (39) durchgehend hohl bzw. rohrförmig ausgebildet ist,
daß dieser Nadelkern (39) an seinem über das Spaltventil (46) hinausreichenden Ende mit einem weiteren Ventil (52) ausgestattet ist,
daß mit dem weiteren Ventil (52) das Ende (42) des Durchgangs (43) im Nadelkern (39) durch das darin unter Druck anstehende (49, 50) Medium bei geöffneten Spaltventil (46) zum Formhohlraum bzw. zur Kavität (34) hin abgesperrt ist,
und daß am weiteren Ventil (52) ein Kraftspeicher (54) angreift, welcher es - zusätzlich zu dem im Nadelkern (39) unter Druck anstehenden Medium - im Schließsinne unter einer Vorspannung hält,
der aber - nach Druckentlastung des im Nadelkern (39) anstehenden Mediums - durch das im Formhohlraum bzw. in der Kavität (34) unter Druck enthaltene Medium im Öffnungssinne des weiteren Ventils (52) und des Durchgangs (43) im Nadelkern (39) vom Formhohlraum bzw. der Kavität (34) weg überwindbar ist.

15. Vorrichtung nach Anspruch 14,
**dadurch gekennzeichnet,**
daß das weitere Ventil (52) als am freien Ende (42) des Nadelkerns (39) liegendes Kugelventil (53) ausgebildet ist,
daß der Kraftspeicher (54) oder -antrieb aus einer hinten am Nadelkern (39) vorgesehenen Feder (54) besteht,
und daß ein mit Radialspiel im Durchgang (43) des Nadelkerns (39) aufgenommener Stift (55) die Stellverbindung des Kraftspeichers (54) oder -antriebs mit dem Kugelventil (52, 53) bildet.

16. Verfahren zum Betrieb einer Vorrichtung für das Spritzgießen von Hohlräume enthaltenden Gegenständen aus Kunststoff, bei dem in den Formhohlraum bzw. die Kavität eines Formwerkzeuges einerseits die Kunststoffschmelze durch eine Düse zugeführt wird, während dieser bzw. diese an einer von der Düse verschiedenen Stelle durch eine Hohlnadel mit einem weiteren unter Druck stehenden Medium, wie z.B. Luft, Gas oder auch Flüssigkeit beaufschlagt wird,
**dadurch gekennzeichnet,**
daß das weitere Medium zunächst unter Druck gegen das unter Vorspannung (23) in seiner Schließstellung gehaltene Spaltventil (16) gerichtet wird,
daß während und/oder nach dem Einspritzen von Duroplast- oder Elastomer-Kunststoff in den Formhohlraum bzw. die Kavität (4) des Formwerkzeuges (1) das Spaltventil (16), z.B. durch Fremdsteuerung (17, 18 bzw. 19, 20) oder Mediendruck gegen die Vorspannung (23) in den Formhohlraum bzw. die Kavität (4) geöffnet wird, um das unter Druck stehende Medium in den Duroplast- bzw. Elastomer-Kunststoff einzuführen,
und daß dann das Medium zeitverzögert druckentlastet sowie über das ausschließlich durch Fremdsteuerung (17, 18 bzw. 19, 20) -wiederum - geöffnete Spaltventil (16) aus dem Formteil abgeführt wird.

## Claims

1. Device for the injection moulding of objects, which contain hollow spaces, from synthetic material in a mould tool (1), the mould hollow space or cavity (14) of which on the one hand is to be fed with molten synthetic material through a nozzle and on the other hand is loadable with a further medium, such as for example air, gas or also liquid, standing under pressure through a hollow needle (5) at a location different from the nozzle, wherein a needle core (9) capable of limited axial displacement is arranged in the hollow needle (5) and the mouth opening of the hollow needle (5) towards the mould hollow space or the cavity (4) is variable in its throughflow cross-section or openable and closable by way of this needle core (9), wherein the needle core (9) together with the mouth end of the hollow needle forms a radially directed gap valve (16), wherein the needle core (9) carries a thickened head or plate (10), which lies in front of the mouth end of the hollow needle (5) and the outer diameter of which at least approximately corresponds to the outer diameter of the hollow needle (5) and wherein the needle core (9) is axially supported relative to the hollow needle by spring means (23), characterised thereby that the spring means (23) constantly engages (11, 12, 13) at the needle fore (9) in the sense of closing the mouth opening or the gap valve (16) and that the needle core (9) is capable of limited displacement against the spring means in the opening sense.

2. Device according to claim 1, characterised thereby that an externally controlled power drive (17, 18) for the needle core (9) is provided and is effective in opposition to the spring means (Fig. 1).

3. Device according to claim 1, characterised thereby that as externally controlled power drive (19, 20) either an electromagnet (17), by a plunger (18) oriented against the rearward end of the needle core (9), or a piston-cylinder unit (19, 20), which is loadable with pressure means, engages (11, 12, 13) at the rearward end of the needle core (9).

4. Device according to claim 3, characterised thereby that the needle core (9) is inserted by its rearward end (11) into a piston (13), which is received in a cylinder bore (14) to be capable of limited axial displacement, that the spring means (23) are restrained between the rear side of the piston (13) and an end enlargement (15) of the hollow needle (9) and concentrically surround the needle core (9) and that the feed-in location (8) for the medium standing under pressure is associated with the installation region of the spring means (23).

5. Device according to one of claims 1 to 4, in which a head or plate of the needle core together with the mouth end of the hollow needle forms a gap valve, for example radially oriented, characterised thereby that the gap valve (16) leaves open a mouth gap of predeterminable size, for example less than 0.2 millimetres, also in the basic setting, which is held by the spring means (23), of the needle core (9).

6. Device according to one of claims 1 to 4, in which a head or plate of the needle core together with the mouth end of the hollow needle forms a gap valve, for example radially oriented, characterised thereby that an opening gap with a size of zero is set or preset at the gap valve (16) in the basic setting, which is held or biassed by the spring means (23), of the needle core (9).

7. Device for the injection moulding of objects, which contain hollow spaces, from synthetic material in a mould tool, the mould hollow space or cavity of which on the one hand is to be fed with molten synthetic material through a nozzle and on the other hand is loadable with a further medium, such as for example air, gas or also liquid, standing under pressure through a hollow needle at a location different from the nozzle, wherein a needle core capable of limited axial displacement is arranged in the hollow needle and the mouth opening of the hollow needle towards the mould hollow space or the cavity is variable in its throughflow cross-section or openable and closable by way of this needle core, wherein the needle core disposed in the hollow needle together with the mouth end of the hollow needle forms a radially directed gap valve, wherein the needle core carries a thickened head or plate, which lies in front of the mouth end of the hollow needle and the outer diameter of which at least approximately corresponds to the outer diameter of the hollow needle and wherein the needle core is fixed by its rearward end in a socket supported against the rearward end of the hollow needle, especially according to one of claims 1 to 6, characterised thereby that the needle core (9) is detachably (11, 12) coupled with the socket (13) out from the mouth end (6) of the hollow needle (5) and through this.

8. Device according to claim 7, characterised thereby that the coupling is formed by a threaded portion (11) at the rearward end of the needle core (9) and a nut member (12) in the socket (13) and this coupling (11, 12) is actuable by way of a tool engagement (25), for example a diametral slot or an internal hexagon, which is disposed at the end face in the head or plate (10) of the needle core (9).

9. Device according to claim 7, characterised thereby that a twist connection or a bayonet lock is provided as coupling means between the rearward end of the needle core (9) and the socket (23).

10. Device according to claim 7, characterised thereby that clamping bodies are provided between the rearward end of the needle core (9) and the socket (23).

11. Device for the injection moulding of objects, which contain hollow spaces, from synthetic material in a mould tool, the mould hollow space or cavity of which on the one hand is to be fed with molten synthetic material through a nozzle and on the other hand is loadable with a further medium, such as for example air, gas or also liquid, standing under pressure through a hollow needle at a location different from the nozzle, wherein a needle core capable of limited axial displacement is arranged in the hollow needle and the mouth opening of the hollow needle towards the mould hollow space or the cavity is variable in its throughflow cross-section or openable and closable by way of this needle core, wherein the needle core together with the mouth end of the hollow needle forms a, for example, radially directed gap valve, wherein the needle core carries a thickened head or plate, which lies in front of the mouth end of the hollow needle and the outer diameter of which at least approximately corresponds to the outer diameter of the hollow needle and wherein the needle core is axially supported relative to the hollow needle, characterised thereby that the support for the needle core (9) consists of a power drive actuable in both the sense of closing and the sense of opening.

12. Device according to claims 1 to 3 and 11, characterised thereby that a motor drive with spindles, thus a so-called setting drive, is provided as power drive.

13. Device according to claim 2 and 11, characterised thereby that a diaphragm loadable by pressure means is provided as externally-controlled power drive.

14. Device according to one of claims 1 to 4 and 6 as well as 11 to 13, characterised thereby that also the needle core (39) is formed to be continuously hollow or tubular, that this needle core (39) is equipped with a further valve (52) at its end extending beyond the gap valve (46), that by the further valve (52) the end (42) of the passage (43) in the needle core (39) is blocked towards the mould hollow space or cavity (34) through the medium, which appears therein under pressure, when the gap valve (46) is open, and that engaging at the further valve (52) is a force store (54), which it holds - additionally to the medium appearing in the needle core (39) under pressure - under a bias in the sense of closing, but which - after pressure relief of the medium appearing in the needle core (39) - can be overcome by the medium, which is contained in the mould hollow space or the cavity (34) under pressure, in the sense of opening of the further valve (52) and the passage (43) in the needle core (39) away from the mould hollow space or the cavity (34).

15. Device according to claim 14, characterised thereby that the further valve (52) is formed as ball valve (53) disposed at the free end (42) of the needle core (39), that the force store (54) or force drive consists of a spring (54) provided rearwardly at the needle core (39), and that a pin (55) received with radial play in the passage (43) of the needle core (39) forms the setting connection of the force store (54) or force drive with the ball valve (52, 53).

16. Method of operating a device for the injection moulding of objects, which contain hollow spaces, from synthetic material, in which on the one hand the molten synthetic material is fed through a nozzle into the mould hollow space or the cavity of a mould tool, whilst this hollow space or cavity is loadable with a further medium, such as for example air, gas or also liquid, standing under pressure through a hollow needle at a location different from the nozzle, characterised thereby that the further medium is initially directed under pressure against the gap valve (16) held in its closing position under bias (23), that during and/or after the injection of thermosetting or elastomeric synthetic material into the mould hollow space or the cavity (4) of the mould tool (1) the gap valve (16) is opened, for example by external control (17, 18 or 19, 20) or medium pressure against the bias (23) in the mould hollow space or the cavity (4) in order to feed the medium standing under pressure into the thermosetting or elastomeric synthetic material and that then the medium is relieved of pressure delayed over time as well as discharged from the mould part by way of the gap valve (16) opened - again - exclusively by external control (17, 18 or 19, 20).

## Revendications

1. Dispositif pour le moulage par injection d'objets en matière synthétique présentant des espaces creux dans un outil de moulage (1), l'espace creux de moulage ou la cavité (14) étant d'une part alimenté par la masse de matière synthétique en fusion à travers un gicleur et pouvant d'autre part être alimenté, en une autre endroit que celui du gicleur, à travers une aiguille creuse (5) par un autre agent sous pression, tel que par exemple de l'air, un gaz ou également du liquide, l'aiguille creuse (5) comportant un noyau d'aiguille (9) qui peut être déplacé axialement de manière limitée et la section de passage de l'orifice de l'aiguille creuse (5) vers l'espace creux de moulage ou la cavité (4) pouvant être modifiée ou ouverte et fermée à l'aide de ce noyau d'aiguille (9), le noyau d'aiguille (9) formant, avec l'extrémité de l'orifice de l'aiguille creuse, une soupape de séparation (16) à orientation radiale, le noyau d'aiguille (9) comportant une tête ou un disque (10) plus épais, qui est situé devant l'extrémité de l'orifice de l'aiguille creuse (5) et dont le diamètre extérieur correspond au moins approximativement au diamètre extérieur de l'aiguille creuse (5), et le noyau d'aiguille (9) étant supporté axialement par rapport à l'aiguille creuse à l'aide de dispositifs à ressort (23), caractérisé en ce que les dispositifs à ressort (23) s'agrippent (11, 12, 13) continuellement au noyau d'aiguille (9) dans le sens de la fermeture de l'orifice ou de la soupape de séparation (16) et en ce que le noyau d'aiguille (9) peut être déplacé de manière limitée en s'opposant aux dispositifs à ressort dans le sens de l'ouverture.

2. Dispositif selon la revendication 1, caractérisé en ce qu'on a prévu un dispositif d'entraînement à moteur (17, 18) piloté pour le noyau d'aiguille (9), qui agit à contre-sens par rapport aux dispositifs à ressort (fig. 1).

3. Dispositif selon la revendication 1, caractérisé en ce que le dispositif d'entraînement à moteur piloté (19, 20) pour le noyau d'aiguille (9) est soit un électroaimant (17) comportant un poussoir (18) dirigé contre l'extrémité postérieure du noyau d'aiguille (9) ou une unité à piston et à cylindre (19, 20) alimentée par un agent sous pression s'agrippant (11, 12, 13) à l'extrémité postérieure du noyau d'aiguille (9).

4. Dispositif selon la revendication 3, caractérisé en ce que l'extrémité postérieure (1)) du noyau d'aiguille (9) est placée dans un piston (13) qui est introduit dans un trou cylindrique (14) de manière à pouvoir être déplacé latéralement de manière limitée, en ce que les dispositifs à ressort (23) sont tendus entre la face postérieure du piston (13) et un épaississement terminal (15) de l'aiguille creuse (9) et entourent concentriquement le noyau d'aiguille (9) et en ce que l'endroit d'alimentation (8) de l'agent sous pression est disposé au niveau de la zone de montage des dispositifs à ressort (23).

5. Dispositif selon une quelconque des revendications 1 à 4, dans lequel une tête ou un disque du noyau d'aiguille forme une soupape de séparation, par exemple à orientation radiale, avec l'orifice du l'aiguille creuse, caractérisé en ce que la soupape de séparation (16) laisse ouverte une fente de dimension prédéfinie, par exemple < 0,2 mm, même dans la position de base du noyau d'aiguille (9) maintenue par les dispositifs à ressort (23).

6. Dispositif selon une quelconque des revendications 1 à 4, dans lequel une tête ou un disque du noyau d'aiguille forme une soupape de séparation, par exemple à orientation radiale, avec l'orifice de l'aiguille creuse, caractérisé en ce qu'on prédéfinit ou règle au niveau de la soupape de séparation (16), dans la position de base du noyau d'aiguille (9) maintenue ou tendue par les dispositifs à ressort (23) une fente d'ouverture avec une dimension 0.

7. Dispositif pour le moulage par injection d'objets en matière synthétique présentant des espaces creux dans un outil de moulage, l'espace creux de moulage ou la cavité étant d'une part alimenté par la masse de matière synthétique en fusion à travers un gicleur et pouvant d'autre part être alimenté, en un autre endroit que celui du gicleur, à travers une aiguille creuse par un autre agent sous pression, tel que par exemple de l'air, un gaz ou également du liquide, l'aiguille creuse comportant un noyau d'aiguille qui peut être déplacé axialement de manière limitée et la section de passage de l'orifice de l'aiguille creuse vers l'espace creux de moulage ou la cavité pouvant être modifiée ou ouverte et fermée à l'aide de ce noyau d'aiguille, le noyau d'aiguille se trouvant dans l'aiguille creuse formant avec l'extrémité de l'orifice de l'aiguille creuse une soupape de séparation, par exemple à orientation radiale, le noyau d'aiguille comportant une tête ou un disque plus épais, qui est situé devant l'extrémité de l'orifice de l'aiguille creuse et dont le diamètre extérieur correspond au moins approximativement au diamètre extérieur de l'aiguille creuse, et l'extrémité postérieure du noyau d'aiguille étant fixée dans un support appuyé contre l'extrémité postérieure de l'aiguille creuse, en particulier selon une quelconque des revendications 1 à 6, caractérisé en ce que le noyau d'aiguille (9) est assemblé avec le support (13) à partir de l'extrémité (6) de l'orifice de l'aiguille creuse (5) et de manière amovible (11, 12) à travers celle-ci.

8. Dispositif selon la revendication 7, caractérisé en ce que l'assemblage est formé par une section filetée (11) de l'extrémité postérieure du noyau d'aiguille (9) et une pièce taraudée (12) dans le support (13) et en ce que cet assemblage (11, 12) peut être actionné via une prise mécanique (25), par exemple une fente diamétrale ou six pans creux, située dans la face de la tête ou du disque (10) du noyau d'aiguille (9).

9. Dispositif selon la revendication 7, caractérisé en ce qu'on a prévu comme dispositif d'assemblage entre l'extrémité postérieure du noyau d'aiguille (9) et le support (23) un joint à baïonnette ou un emboîtement à baïonnette.

10. Dispositif selon la revendication 7, caractérisé en ce qu'on a prévu comme dispositif d'assemblage entre l'extrémité postérieure du noyau d'aiguille (9) et le support (23) des dispositifs de serrage.

11. Dispositif pour le moulage par injection d'objets en matière synthétique présentant des espaces creux dans un outil de moulage, l'espace creux de moulage ou la cavité étant d'une part alimenté par la masse de matière synthétique en fusion à travers un gicleur et pouvant d'autre part être alimenté, en un autre endroit que celui du gicleur, à travers une aiguille creuse par un autre agent sous pression, tel que par exemple de l'air, un gaz ou également du liquide, l'aiguille creuse comportant un noyau d'aiguille qui peut être déplacé axialement de manière limitée et la section de passage de l'orifice de l'aiguille creuse vers l'espace creux de moulage ou la cavité pouvant être modifiée ou ouverte et fermée à l'aide de ce noyau d'aiguille, le noyau d'aiguille formant, avec l'extrémité de l'orifice de l'aiguille creuse, une soupape de séparation, par exemple à orientation radiale, le noyau d'aiguille comportant une tête ou un disque plus épais, qui est situé devant l'extrémité de l'orifice de l'aiguille creuse et dont le diamètre extérieur correspond au moins approximativement au diamètre extérieur de l'aiguille creuse, et le noyau d'aiguille étant supporté axialement par rapport à l'aiguille creuse, caractérisé en ce que le support pour le noyau d'aiguille (9) est constitué par un dispositif d'entraînement à moteur pouvant être actionné tant dans le sens de l'ouverture que dans le sens de la fermeture.

12. Dispositif selon une quelconque des revendications 1 à 3 et 11, caractérisé en ce qu'on a prévu comme dispositif d'entraînement à moteur un dispositif d'entraînement motorisé avec des arbres, c'est-à-dire ce qu'on appelle un servomoteur.

13. Dispositif selon la revendication 2 et 11, caractérisé en ce qu'on a prévu comme dispositif d'entraînement à moteur piloté pour le noyau d'aiguille une membrane pouvant être alimentée par un agent sous pression.

14. Dispositif selon une quelconque des revendications 1 à 4 et 6 ainsi que 11 à 13, caractérisé en ce que le noyau d'aiguille (39) présente également un creux continu ou est exécuté sous forme d'un tube, en ce que ce noyau d'aiguille (39) est équipé, en son extrémité dépassant la soupape de séparation (46), d'une autre soupape (52), en ce que cette autre soupape (52) ferme l'extrémité (42) du passage (43) vers l'espace creux ou la cavité (34) dans le noyau d'aiguille (39) à l'aide d'un agent sous pression qui s'y trouve (49, 50) lorsque la soupape de séparation (46) est ouverte, et en ce qu'un accumulateur (54) s'agrippe à l'autre soupape (52), ledit accumulateur maintenant ladite soupape sous une précontrainte dans le sens de la fermeture, en plus de l'agent sous pression se trouvant dans le noyau d'aiguille (39), ladite précontrainte pouvant toutefois être surpassée, après avoir relâché la pression de l'agent dans le noyau d'aiguille (39), par l'agent sous pression se trouvant dans l'espace creux ou la cavité (34) dans le sens de l'ouverture de l'autre soupape (52) et du passage (43) dans le noyau d'aiguille (39) en s'éloignant de l'espace creux ou de la cavité (34).

15. Dispositif selon la revendication 14, caractérisé en ce que l'autre soupape (52) est exécutée sous forme d'une soupape à bille (53) située en l'extrémité libre (42) du noyau d'aiguille (39), en ce que l'accumulateur (54) ou le dispositif d'entraînement est constitué par un ressort (54) prévu derrière le noyau d'aiguille (39) et en ce qu'une tige (55) placée avec un jeu radial dans le passage (43) du noyau d'aiguille (39) forme l'assemblage de réglage de l'accumulateur (54) ou du dispositif d'entraînement avec la soupape à bille (52, 53).

16. Procédé pour le fonctionnement d'un dispositif pour le moulage par injection d'objets en matière synthétique présentant des espaces creux, l'espace creux de moulage ou la cavité d'un outil de moulage étant d'une part alimenté par la masse de matière synthétique en fusion à travers un gicleur et pouvant d'autre part être alimenté, en un autre endroit que celui du gicleur, à travers une aiguille creuse par un autre agent sous pression, tel que par exemple de l'air, un gaz ou également du liquide, caractérisé en ce que l'autre agent est d'abord dirigé sous pression vers la soupape de séparation (16) qui est maintenue sous précontrainte (23) dans sa position de fermeture, en ce que pendant et/ou après l'injection de la résine thermodurcissable ou de la matière synthétique élastomère dans l'espace creux ou la cavité (4) de l'outil de moulage (1), la soupape de séparation (16) est ouverte vers l'espace creux ou la cavité (4) , par exemple par une commande pilotée (17, 18 ou 19, 20) ou un agent sous pression, contre la précontrainte (23) pour introduire l'agent sous pression dans la résine thermodurcissable ou la matière synthétique élastomère et en ce que l'agent est ensuite évacué, de manière décalée dans le temps et en n'étant plus sous pression ainsi que via la soupape de séparation qui est à nouveau ouverte, exclusivement par la commande pilotée (17, 18 ou 19, 20) de la pièce moulée.
